# EUROPÄISCHE PATENTSCHRIFT

(11) **EP 1 190 812 B1**
(45) Veröffentlichungstag und Bekanntmachung des Hinweises auf die Patenterteilung: **25.02.2004**
(21) Anmeldenummer: 00120851.1
(22) Anmeldetag: 25.09.2000
(51) Int. Cl.: B23Q 11/00, B27G 13/08

(54) **Vorrichtung und Verfahren zum spanenden Bearbeiten von Werkstücken**
Device and method for chip removing machining of workpieces
Procédé et dispositif pour l'usinage de pièces par enlèvement de copeaux

(43) Veröffentlichungstag der Anmeldung: 27.03.2002
(73) Patentinhaber: Ledermann GmbH, 72160 Horb (DE); HOMAG MASCHINENBAU AG, D-72296 Schopfloch (DE)
(72) Erfinder: Dr. Ing. Hans-Jürgen Gittel, 72108 Rottenburg (DE); Dipl. Ing. Ewald Westfal, 72336 Balingen (DE); Kurt Kalmbach, 72275 Alpirsbach (DE); Wilhelm Kalmbach, 72296 Schopfloch (DE); Prof. Dr. Ing. habil. Dr. h.c. Roland Fischer, 01069 Dresden (DE); Dipl. Ing. Michael Oertel, 01097 Dresden (DE)
(74) Vertreter: HOFFMANN - EITLE

(56) Entgegenhaltungen:
- WO-A-00/48802
- DE-A- 3 602 419
- DE-U- 9 420 668
- DE-U- 29 701 486
- DE-U- 29 906 758

## Beschreibung

### Technisches Gebiet

Die vorliegende Erfindung betrifft eine Vorrichtung zum spanenden Bearbeiten von Werkstücken, insbesondere von Werkstücken aus Holzwerkstoffen, Kunststoff oder dergleichen. Ferner betrifft die Erfindung ein Verfahren zum spanenden Bearbeiten von Werkstücken mittels einer solchen Vorrichtung.

### Stand der Technik

Aus der DE 195 09 933 C1 ist ein spanabtragendens, rotierendes Werkzeug zum spanenden Bearbeiten von Werkstücken, insbesondere von Werkstücken aus Holz, Kunststoff und dergleichen bekannt, welches im Wesentlichen als Hohlkörper ausgebildet ist und an seinem Außenumfang wenigstens eine Schneide aufweist. Ein an die jeweilige Schneide angrenzender Bereich des Werkzeugs ist durch eine Spanaufnahmeöffnung zum Durchleiten von Spänen in einen hohlen Innenraum, nämlich eine hohle Werkzeugwelle, des Werkzeugs durchbrochen. Das Werkzeug besitzt also eine innenliegende Spanabführung. Zur Unterstützung der Abfuhr der beim Betrieb dieses Werkzeuges anfallenden Späne wird vorgeschlagen, einen Luftstrom in Längsrichtung, d.h. in Achsenrichtung, durch die hohle Werkzeugwelle hindurch zu führen. Ferner ist dieser Druckschrift zu entnehmen, dass die Spanabfuhr zusätzlich durch eine konische Ausbildung der hohlen Werkzeugwelle gefördert werden kann.

Bei Vorrichtungen mit dem zuvor beschriebenen Werkzeugtyp gelangt ein sehr hoher Anteil der erzeugten Späne in den hohlen Werkzeuginnenraum. Bei Holzwerkstoffen kann dieser Anteil zum Beispiel ca. 95 % bis ca. 98 % der erzeugten Späne betragen. Dem entsprechend kommt der Spanabfuhr beziehungsweise der Spanabsaugung aus dem Werkzeug eine besondere Bedeutung zu.

Es hat sich allerdings gezeigt, dass sich bei konventionellen Vorrichtungen, welche Werkzeuge mit innenliegender Spanabführung aufweisen, die Späne nur mit einem sehr großen Energieaufwand absaugen lassen. Beispielsweise beträgt der Energiebedarf für Absauganlagen in holzverarbeitenden Betrieben im Schnitt zwischen ca. 30 % und ca. 50 % des gesamten Jahresstromverbrauchs. Es wäre daher wünschenswert und sowohl aus technischer als auch wirtschaftlicher Sicht sinnvoll, den Energiebedarf für Absauganlagen zu reduzieren.

Bei Werkzeugen mit innenliegender Spanabführung wird ein vom Werkstück abgetrennter Span üblicherweise durch die Schneide beschleunigt und bewegt sich durch die Spanaufnahmeöffnung in den hohlen Werkzeuginnenraum. Aufgrund der Rotation des Werkzeuges ist die im hohlen Innenraum befindliche Luftmasse jedoch einer Fliehkraftwirkung ausgesetzt, wodurch die mitgerissene Luft bestrebt ist, nach außen aus der Spanaufnahmeöffnung herauszutreten. Die Luftmasse strömt also in eine Richtung, welche der Bewegungsrichtung oder Flugbahn der in das Werkzeug eintretenden Späne genau entgegengesetzt ist. Die Bewegung der Späne in den Werkzeuginnenraum hinein wird dadurch behindert, und die Späne werden abgebremst oder sogar wieder aus der Spanaufnahmeöffnung heraus getragen. Insbesondere große Späne sind von diesem nachteiligen Effekt betroffen. Diese unerwünschten Wirkungen können zu einer Beeinträchtigung der Spanabfuhr oder sogar zu einer Verstopfung der Spanaufnahmeöffnung und damit zu einem erhöhten Werkzeugverschleiß führen. Wieder zur Werkzeugaußenseite gelangte oder durch die Spanaufnahmeöffnung und/oder die Absaugung nicht erfasste Späne können an dem Wirkungsort des Werkzeuges zudem auf unnötige Weise mehrfach zerspant werden, woraus ebenfalls ein erhöhter Werkzeugverschleiß, geringere Standzeiten und schließlich höhere Schadstoffbelastungen der Umgebungsluft resultieren.

Darüber hinaus werden in den hohlen Werkzeuginnenraum gelangte, aber stark abgebremste Späne durch die Fliehkraftwirkung nach außen gegen die Innenwandung des hohlen Werkzeugkörpers gedrückt und können sich dort ansammeln und sogar festsetzen. Die Spanabfuhr wird dadurch wesentlich erschwert und es kann unter Umständen eine Unwucht auftreten, was gerade bei hohen Werkzeugdrehzahlen der Betriebssicherheit abträglich ist.

Nicht abgeführte und/oder sogar wieder aus der Spanaufnahmeöffnung heraus getragene Späne können sich überdies an der Werkstückoberfläche ansammeln oder ablagern und unerwünschte Eindruckspuren hinterlassen. Mehrfach zerspante Späne zeichnen sich insbesondere bei weicheren Werkstoffen, wie zum Beispiel Holzwerkstoffen oder Kunststoffen, durch unschöne Bearbeitungsspuren am Werkstück ab. Dies führt zu einer Herabsetzung der Werkstückqualität, was nicht erstrebenswert ist.

Vorrichtungen der zuvor beschriebenen Art, die mit Werkzeugen mit einer innenliegenden Spanführung ausgerüstet sind, benötigen für eine zufriedenstellende Spanabführung deshalb insbesondere bei hohen Schnittgeschwindigkeiten bzw. hohen Drehzahlen große Absauggeschwindigkeiten und extrem leistungsstarke Absaugeinrichtungen. Entsprechend hoch ist deshalb nicht nur der benötigte Energiebedarf, sondern auch die von den Absauganlagen ausgehende Lärmbelastung.

WO-00/48802 offenbart eine Vorrichtung gemäss dem Oberbegriff des Anspruchs 1.

Jedoch auch der verwendete Werkzeugtyp als solcher hat sich als eine erhebliche Lärmquelle erwiesen. So erzeugen konventionelle Werkzeuge mit einer innenliegenden Spanabführung hohe Schallemissionen, die mit Pfeiftönen und/oder pulsierenden akustischen Schwingungen einher gehen, welche von Bedienpersonen der Vorrichtung als extrem unangenehmen empfunden werden. Es ist daher auch erstrebenswert, die von der Vorrichtung einschließlich deren Werkzeugen erzeugte Lärmemission zu reduzieren.

### Darstellung der Erfindung

Der vorliegenden Erfindung liegt daher die Aufgabe beziehungsweise das technische Problem zugrunde, eine geeignete Vorrichtung und ein geeignetes Verfahren zum spanenden Bearbeiten von Werkstücken zu schaffen, die bzw. das eine verbesserte Spanabfuhr, geringere Absaugleistungen und eine Reduzierung der Lärmemission ermöglicht.

Dieses technische Problem wird gelöst durch eine erfindungsgemäße Vorrichtung mit den Merkmalen des Anspruchs 1.

Diese Vorrichtung zum spanenden Bearbeiten von Werkstücken, insbesondere von Werkstücken aus Holzwerkstoffen, Kunststoff oder dergleichen, umfasst:
mindestens ein spanabtragendens, rotierendes und im Wesentlichen als Hohlkörper ausgebildetes Werkzeug mit wenigstens einer Schneide, wobei jeweils ein an die Schneide angrenzender Bereich des Werkzeugs durch eine Spanaufnahmeöffnung zum Durchleiten von Spänen in einen hohlen Innenraum des Werkzeugs durchbrochen ist; und
eine Absaugeinrichtung mit einem ortsfesten, im Wesentlichen als Hohlkörper ausgebildeten Absauggehäuse, das zumindest teilweise in den hohlen Innenraum des Werkzeugs eingreift bzw. ragt und mit mindestens einer Saugluftquelle in Verbindung steht;
wobei der in den hohlen Innenraum des Werkzeugs eingreifende Teil des Absauggehäuses im Bereich eines der Schneide zugeordneten Wirkungsortes des Werkzeugs mindestens ein Spandurchtrittsfenster aufweist, das in einen Absaugkanal des Absauggehäuses mündet; und
wobei der Absaugkanal in einem bezogen auf die Absaugrichtung stromaufwärts an das Spandurchtrittsfenster angrenzenden Absaugkanalabschnitt mindestens eine Hilfsluft-Einspeisungsöffnung aufweist.

Das Werkzeug der erfindungsgemäßen Vorrichtung, welches als Werkzeug mit einer innenliegenden Spanabführung einzustufen ist, kann entweder einteilig oder mehrteilig ausgebildet sein. Ein mehrteiliges Werkzeug kann beispielsweise einen ein- oder mehrteiligen dünnwandigen hohlen Werkzeuggrundkörper aufweisen, der an eine Werkzeugwelle oder - achse und/oder andere Werkzeugkomponenten anschließbar ist. Das Werkzeug ist vorzugsweise rotationssymmetrisch geformt, wobei die Erfindung jedoch nicht auf diese Ausgestaltungsweise beschränkt ist.

Die mindestens eine Schneide des Werkzeugs, bei der es sich um eine geometrisch bestimmte, gerade, profilierte beziehungsweise regelmäßig oder unregelmäßig geformte Schneide handelt, kann integraler Bestandteil des Werkzeugs oder aber ein separates Werkzeugteil sein. Die Schneide kann insbesondere als Wechselschneide ausgestaltet sein. In diesem Fall ist das Werkzeug zweckmäßigerweise mit einer geeigneten Wechseleinrichtung ausgestattet. Die Anzahl der Werkzeugschneiden ist vom jeweiligen Einsatzzweck abhängig.

Anstelle einer einzigen Schneide können natürlich auch zwei oder mehrere Schneiden Anwendung finden. Die Schneiden sind vorzugsweise am radialen Außenumfang des Werkzeugs angebracht. Das Werkzeug kann zusätzlich jedoch auch über stirnseitig angeordnete Schneiden verfügen.

Das Absauggehäuse kann ein- oder mehrteilig sein. Wie bereits zuvor erwähnt, ist das Absaugghäuse ortsfest angeordnet. Insbesondere der zumindest teilweise in den hohlen Innenraum des Werkzeugs eingreifende bzw. ragende Teil des Absauggehäuses kann bezüglich seiner ortsfesten Anordnung aber verstellbar sein. Der in den hohlen Innenraum des Werkzeugs eingreifende bzw. ragende Teil des Absauggehäuses ist an seinen der Innenwand des hohlen Werkzeuginnenraums gegenüber liegenden Abschnitten vorzugsweise rotationssymmetrisch geformt. Es wird jedoch ausdrücklich darauf hingewiesen, dass die Erfindung nicht auf diese Ausgestaltungsweise beschränkt ist. Der in den hohlen Innenraum eingreifende Teil kann grundsätzlich auch asymmetrisch oder unregelmäßig ausgestaltet sein beziehungsweise unregelmäßig geformte Abschnitte aufweisen. Das Absauggehäuse ist zweckmäßigerweise mit Befestigungsmitteln und/oder Anschlussmittel zum Herstellen einer Verbindung mit anderen Vorrichtungskomponenten, wie beispielsweise einem Vorrichtungsgestell oder der Saugluftquelle, ausgestattet. Das Absauggehäuse kann über Leiteinrichtungen, wie z.B. Leitbleche, Nuten, Kanäle oder dergleichen, für die in seinem Inneren fließenden Luftströme verfügen.

Das Spandurchtrittsfenster erstreckt sich vorzugsweise über im Wesentlichen die gesamte Höhe des in den hohlen Innenraum des Werkzeugs eingreifenden Abschnitts des Absauggehäuses. Die in Rotationsrichtung des Werkzeugs am Außenumfang des in den hohlen Innenraum des Werkzeugs eingreifenden Absauggehäuseabschnitts gemessene Breite des Spandurchtrittsfensters ist abhängig von der Streubreite des bei einem jeweiligen Anwendungszweck auftretenden Späneflugs gewählt. Insbesondere hat es sich bewährt, die Breite kleiner als die Teilung der Werkzeugschneiden zu wählen. Die Breite des Spandurchtrittsfensters kann entweder fix vorgegeben oder aber variabel einstellbar sein, z.B. durch Schieberelemente, auswechselbare Fenstereinsätze oder dergleichen. Die Lage der auf die Breite bezogenen Fenstermitte kann entweder symmetrisch oder asymmetrisch zur Position des Wirkungsortes des Werkzeuges sein und auch durch eine Veränderung der ortfesten Position des Absauggehäuses relativ zum Wirkungsort des Werkzeugs manipuliert werden. Hierfür können geeignete Verstelleinrichtungen vorgesehen sein.

Vorzugsweise verkleinert sich der freie Durchtrittsquerschnitt des Absaugkanals zur Saugluftquelle hin.

Bei der Hilfsluft-Einspeisungsöffnung kann es sich beispielsweise um eine direkt oder indirekt in den Absaugkanal mündende Bohrung, Aussparung oder dergleichen handeln. Die Hilfsluft-Einspeisungsöffnung kann über einen Hilfsluftkanal mit dem Absaugkanal verbunden sein. Die Hilfsluft-Einspeisungsöffnung ist vorzugsweise in einem außerhalb des rotierenden Werkzeugs befindlichen Bereich des Absauggehäuses vorgesehen. Die im Sinne der Erfindung gewählte Formulierung "Hilfsluft" bringt zum Ausdruck, dass ein durch die Hilfsluft-Einspeisungsöffnung fließender Luftstrom (Hilfsluftstrom) einen anderen im Absauggehäuse fließenden Luftstrom, nämlich einen infolge der Werkzeugrotation und der Einwirkung der Saugluftquelle pulsierend durch die Spanaufnahmeöffnung und das Spandurchtrittsfenster in den Absaugkanal einströmenden Luftstrom, auf positive Weise beeinflusst, also eine Art Hilfswirkung ausübt, so dass im Absaugkanal letztendlich ein Hauptluftstrom mit bestimmten gewünschten Eigenschaften erzielt wird. Zu diesem Aspekt wird nachfolgend noch detaillierter Stellung genommen werden.

Die erfindungsgemäße Vorrichtung besitzt folgende Vorteile.

Aufgrund des ortsfesten, in den hohlen Innenraum des Werkzeugs eingreifenden Abschnitts des Absauggehäuses wird der hohle Werkzeuginnenraum von den bedingt durch die Werkzeugrotation an sich im Werkzeuginnenraum vorherrschenden Bedingungen entkoppelt, und es werden andere, günstigere Betriebszustände geschaffen.

Bei der erfindungsgemäßen Lösung füllt der in den hohlen Innenraum des Werkzeugs hinein ragende Abschnitt des Absauggehäuses den Innenraum weitgehend aus, wobei die Innenwandung des hohlen Innenraums der Außenwandung des eingreifenden Absauggehäuseabschnitts über einen in der Regel nur geringen Zwischenraum hinweg direkt gegenüber liegt. Es existiert im hohlen Werkzeuginnenraum folglich kein wesentliches Luftmassenvolumen, das einer durch die Rotation des Werkzeugs bedingten Fliehkraftwirkung ausgesetzt sein könnte. Der Zwischenraum zwischen der bezogen auf die Rotationsachse des Werkzeugs radialen Außenseite des Absauggehäuseabschnitts und der radialen Innenseite des Werkzeuges ist hierfür zu gering. Der in den hohlen Innenraum des Werkzeugs eingreifende Abschnitt des Absauggehäuses ist stationär angeordnet, und demzufolge ist der Hohlraum dieses Absauggehäuseabschnitts jeglichen Fliehkrafteffekten des um den Absauggehäuseabschnitt herum rotierenden Werkzeuges entzogen. Es kann sich innerhalb dieses in den hohlen Werkzeuginnenraum eingreifenden Abschnitts des Absauggehäuses also keine Luftströmung aufbauen, die nach außen zu der Werkzeuginnenwandung beziehungsweise der Spanaufnahmeöffnung hin strömt und der Bewegungsrichtung oder natürlichen Flugbahn der in das Werkzeug eintretenden Späne genau entgegengesetzt ist.

Ein von der oder den Schneiden abgetrennter Span fliegt somit nach Verlassen der Spanaufnahmeöffnung des Werkzeugs über einen vernachlässigbaren Zwischenraum hinweg direkt durch das Spandurchtrittsfenster in den vom außenliegenden rotierenden Werkzeug unbeeinflussten Absaugkanal hinein. Die Bewegung der Späne in den Absaugkanal hinein wird deshalb weder behindert noch werden die Späne abgebremst oder sogar wieder aus der Spanaufnahmeöffnung heraus getragen. Dies ist besonders bei großen Späne als sehr vorteilhaft anzusehen. Anders als bei konventionellen Vorrichtungen, die eine nachteilige Gegenströmung im Werkzeughohlraum aufweisen, wird bei der erfindungsgemäßen Vorrichtung die Spanabfuhr nicht beeinträchtigt; und eine Verstopfung der Spanaufnahmeöffnung und damit ein erhöhter Werkzeugverschleiß wird wirkungsvoll vermieden. Auch ist die Möglichkeit, dass Späne aus dem hohlen Werkzeuginnenraum beziehungsweise dem Absaugkanal heraus wieder zur Werkzeugaußenseite gelangen und dort von den Schneiden wiederholt zerspant werden, äußert gering. Dies trägt ebenfalls zu einer Verringerung des Werkzeugverschleisses, zu höheren Standzeiten und einer geringeren Schadstoffbelastungen der Umgebungsluft bei.

Weil bei der erfindungsgemäßen Konfiguration die in den Werkzeuginnenraum und den Absaugkanal eintretenden Späne nicht abgebremst werden, und der Zwischenraum zwischen der Wandung des hohlen Werkzeugsinnenraums und der Außenwandung des eingreifenden Absauggehäuseabschnitts klein ist, ist die Wahrscheinlichkeit gering, dass Späne in diesen Zwischenraum gelangen und sich durch die Fliehkraftwirkung des rotierenden Werkzeugs an die Innenwandung drücken, dort ansammeln oder sogar festsetzen. Dies erleichtert ebenfalls die Spanabfuhr und vermeidet eine Unwucht des Werkzeugs durch Spanansammlungen, was besonders bei hohen Werkzeugdrehzahlen im Hinblick auf die Betriebssicherheit und Genauigkeit des Werkzeuges nützlich ist.

Aufgrund der Tatsache, dass infolge der zuvor erwähnten Wirkungsweise beim Betrieb der erfindungsgemäßen Vorrichtung kaum Späne zurück an die dem Werkstück zugeordnete Werkzeugaußenseite gelangen, lassen sich Spanansammlungen oder - ablagerungen an der Werkstückoberfläche sowie daraus resultierende Eindruckspuren effektiv vermeiden. Wiederholtes Zerspanen von bereits abgetrennten Spänen und dadurch bedingte unschöne Bearbeitungsspuren am Werkstück sind bei der erfindungsgemäßen Vorrichtung kaum zu beobachten. Dies führt insgesamt zu einer Verbesserung der Werkzeugstandzeiten sowie der Werkstückqualität.

Es wird an dieser Stelle angemerkt, dass sich die zuvor dargelegten positiven Effekte und Wirkungsweisen der erfindungsgemäßen Vorrichtung grundsätzlich bereits allein durch die Bereitstellung des zumindest teilweise in den hohlen Innenraum des Werkzeugs eingreifenden Absauggehäuseabschnitts erzielen lassen, ohne dass dafür zwingenderweise eine Aktivierung der Saugluftquelle erforderlich ist. Der Betrieb der Saugluftquelle und damit die aktive Absaugung der Späne verstärkt jedoch die vorteilhafte Wirkung des besagten Absauggehäuseabschnitts, wie nachfolgend ausgeführt.

Da die Späne, wie oben erwähnt, ungebremst durch das Spandurchtrittsfenster in den Absaugkanal fliegen und eine relativ hohe kinetische Energie besitzen, kann diese Bewegungsenergie zum Abtransport der Späne genutzt werden. Die Spanabsaugung ist deshalb mit geringerer Leistung und kleineren Luftmassenströmen realisierbar, die lediglich dazu ausreichen müssen, die Späne vom Werkzeug zu einem Spänebunker oder dergleichen zu transportieren. Selbst bei hohen Schnittgeschwindigkeiten bzw. hohen Drehzahlen werden für eine wirkungsvolle Spanabführung deshalb keine besonders hohen Absauggeschwindigkeiten oder leistungsstarke Absaugeinrichtungen benötigt. Nicht nur der benötigte Energiebedarf, sondern auch die von den Absauganlagen ausgehende Lärmbelastung kann somit verringert werden.

Jedoch auch die vom Werkzeug selbst ausgehende Lärmemission ist bei der erfindungsgemäßen Vorrichtung erheblich reduziert. Wegen des in den hohlen Innenraum des Werkzeugs hinein ragenden Abschnitts des Absauggehäuses in Kombination mit der Bereitstellung der Hilfsluft-Einspeisungsöffnung wird nämlich gleichermaßen der Werkzeuginnenraum akustisch abgekoppelt, und sowohl die akustischen als auch strömungstechnischen Zustände im Werkzeuginnenraum werden positiv beeinflusst.

Bei eingeschalteter Saugluftquelle strömt gewöhnlich ein (Außen-)Luftstrom von der Werkzeugaußenseite her durch die Spanaufnahmeöffnung und das Spandurchtrittsfenster in den Absaugkanal ein. Da das hohle Werkzeug mit seiner Spanaufnahmeöffnung um das Spandurchtrittsfenster herum rotiert, wird der Strömungsweg durch das Spandurchtrittsfenster also periodisch verschlossen und wieder geöffnet. Daraus resultiert (ähnlich wie bei dem eingangs erwähnten Werkzeug gemäß dem Stand der Technik) ein pulsierender Luftstrom, der ohne weitere Maßnahmen sehr laute und äußerst unangenehme Pfeiftönen und/oder pulsierende akustischen Schwingungen erzeugen würde. Erfindungsgemäß wird nun aber mittels der Hilfsluft-Einspeisungsöffnung ein Hilfluftstrom bereitgestellt, der innerhalb des Absaugkanals mit dem pulsierend durch das Spandurchtrittsfenster einströmenden Luftstrom vermischt beziehungsweise überlagert wird. Daraus resultiert ein im wesentlichen konstanter, saugend wirkender und innerhalb des Absaugkanals entlang dem Spandurchtrittsfenster strömender Hauptluftstrom.

Durch die Vermischung beziehungsweise Überlagerung des pulsierenden Luftstroms mit dem Hilfsluftstrom werden die Pulsspitzen reduziert oder gedämpft und auch resonanzartige Schwingungszustände vermieden, so dass die Lärmemission und die äußerst unangenehmen Pfeiftöne und/oder pulsierenden akustischen Schwingungen wesentlichen reduziert werden können. Die weitgehende Konstanz oder Gleichmäßigkeit des Hauptluftstroms im Vergleich zu einem ausgeprägt pulsierenden Luftstrom ist darauf zurückzuführen, dass selbst bei einem periodischen Verschließen des Spandurchtrittsfensters infolge des um das Spandurchtrittsfenster herum rotierenden, die Spanaufnahmeöffnung aufweisenden Werkzeugs stets Luft durch die Hilfsluft-Einspeisungsöffnung angesaugt werden kann.

Da der Hauptluftstrom darüber hinaus an der Innenseite des Absaugkanals an dem Spandurchtrittsfenster entlang streicht und somit kaum Toträume entstehen können, wird ein unerwünschtes Festsetzen oder Ansammeln von Spänen an Rändern und Kanten des Spandurchtrittsfensters oder daran angrenzender Kanalbereiche zuverlässig verhindert.

Zusammenfassend gestattet die erfindungsgemäße Vorrichtung somit eine erheblich verbesserte Spanabfuhr, mit deren Hilfe die Späne zu einem extrem hohen Prozentsatz aufgefangen und abgeleitet werden können, eine wesentliche Reduzierung der erforderlichen Absaugluft (um bis zu ca. 50 %) und Absaugleistung bei gleichzeitiger Verminderung der Lärmemission und nachteiliger akustischer Effekte. Diese Vorteile sind mit relativ geringem fertigungstechnischen Aufwand zu erzielen. Die erfindungsgemäße Vorrichtung arbeitet sowohl aus technischer als auch wirtschaftlicher Sicht sehr effektiv und gewährleistet eine hohe Bearbeitungsqualität.

Gemäß einem vorteilhaften Ausgestaltungsmerkmal der erfindungsgemäßen Vorrichtung ist das Werkzeug im Wesentlichen als topfartiger Hohlkörper ausgebildet. Diese topfartige Form, welche auch zylindrische, konische, glockenförmige oder andere regelmäßig und unregelmäßig geformte, insbesondere auch rotationssymmetrische Gebilde einschließt, ist besonders vorteilhaft in Verbindung mit dem zumindest teilweise in den hohlen Innenraum des Werkzeuges eingreifenden bzw. ragenden Absauggehäuse verwendbar.

Der in den hohlen Innenraum des Werkzeuges eingreifende Teil des Absauggehäuses ist darüber hinaus vorzugsweise derart gestaltet, dass er den hohlen Innenraum im Wesentlichen vollständig ausfüllt. "Im Wesentlichen" bedeutet hier, dass stets ein ausreichender, vorzugsweise kleiner Spalt oder Zwischenraum zwischen dem Außenumfang bzw. den Außenflächen des Absauggehäuses und dem Innenumfang bzw. den Innenflächen des Werkzeuges verbleibt, was einen sicheren Betrieb des rotierenden Werkzeuges gewährleistet. Die nahezu vollständige Ausfüllung des betreffenden Werkzeuginnenraumes stellt insbesondere sicher, dass die radialen Distanzen zwischen der Spanaufnahmeöffnung des Werkzeugs und der Spandurchtritssöffnung des Absauggehäuses gering gehalten werden können und im laufenden Betrieb der Vorrichtung keine größeren Mengen von Spänen in den hohlen Innenraum des Werkzeuges beziehungsweise zwischen die Innenraumwandung und die Außenflächen des Absauggehäuses gelangen und sich dort unter Umständen infolge der Fliehkraftwirkung respektive der Zentrifugalkraft auf unerwünschte Weise ansammeln oder festsetzen.

Ein weiteres vorteilhaftes Ausgestaltungsmerkmal der Erfindung sieht vor, dass der in den hohlen Innenraum des Werkzeuges eingreifende Teil des Absauggehäuses topfartig ausgebildet ist. Somit lässt sich dieser Teil des Absauggehäuses gegen den hohlen Innenraum des Werkzeuges verschließen und es können in Verbindung mit weiteren Vorrichtungsmerkmalen, auf die nachfolgend noch näher . eingegangen wird, bestimmte gewünschte Strömungszustände im Inneren des Absauggehäuses erzielt werden. Der topfartige Absauggehäuseabschnitt kann lösbar an den übrigen Teilbereichen des Absauggehäuses fixiert sein, so das für verschiedene Anwendungszwecke unterschiedlich ausgestaltete topfartige Hohlkörper ohne größeren Montage- und Demontageaufwand austauschbar sind.

Bei einer anderen bevorzugten Ausführungsvariante der erfindungsgemäßen Vorrichtung, die mit einem Werkzeug ausgestattet ist, dessen hohler Innenraum zylindrisch geformt ist, besitzt der in den hohlen Innenraum des Werkzeuges eingreifende Teil des Absauggehäuses ebenfalls eine im Wesentlichen zylindrische Form. Ferner ist es bevorzugt, dass bei einer erfindungsgemäßen Vorrichtung, die mit einem Werkzeug ausgestattet ist, dessen hohler Werkzeuginnenraum konisch geformt ist, auch der in den hohlen Innenraum des Werkzeuges eingreifende Teil des Absauggehäuses im Wesentlichen konisch ausgebildet ist. Beide vorhergenannte Varianten gewährleisten zunächst, dass bei einem weitgehend oder vollständig rotationssymmetrischen Werkzeug der Außenumfang des Absauggehäuses mit einem geringen Zwischenraum in den hohlen Innenraum des Werkzeuges einpassbar und die Distanz zwischen der Spanaufnahmeöffnung des Werkzeugs und der Spandurchtrittsöffnung des Absauggehäuses wiederum gering zu halten ist. Im Falle eines Werkzeuges mit einem konischen hohlen Innenraum, der bei Rotation des Werkzeuges die Abfuhr von Spänen, welche in den Innenraum des Werkzeuges gelangt sind, unterstützt, können die Späne somit durch den zwischen den konischen Innenflächen des Werkzeuges und den konischen Außenflächen des Absauggehäuses gebildeten Zwischenraum abgeführt werden. Der hohle Innenraum des Werkzeuges und der in diesen hohlen Innenraum eingreifende Teil des Absauggehäuses besitzen vorzugsweise den gleichen Konizitätsgrad. Es ist jedoch ebenso denkbar, den Konizitätsgrad dieser beiden Teile geringfügig unterschiedlich auszubilden oder sogar eine konische Wandung des Werkzeuginnenraums mit einer zylindrischen Absauggehäuse-Außenwandung zu kombinieren.

Vorzugsweise weist das Absauggehäuse eine Durchgangsöffnung oder eine Vertiefung zum Aufnehmen eines Antriebsmittels, insbesondere einer Welle oder Achse des rotierenden Werkzeuges auf. Aufgrund der hohlen oder topfartigen Ausgestaltungsweise des Werkzeuges lässt sich dieses auf das Absauggehäuse aufsetzen oder stülpen, wodurch eine flache bzw. niedrige Bauweise realisierbar ist. Die Durchgangsöffnung bzw. die Vertiefung ist vorzugsweise durch eine Trennwand oder dergleichen gegenüber anderen hohlen Innenräumen des Absauggehäuses, insbesondere jedoch gegenüber dem Absaugkanal des Absauggehäuses abgegrenzt.

Entsprechend einem noch anderen vorteilhaften Ausgestaltungsmerkmal der erfindungsgemäßen Vorrichtung definiert der Absaugkanal einen bezogen auf eine Rotationsachse des Werkzeuges im Wesentlichen radialen Strömungsweg, der ausgehend von der Hilfsluft-Einspeisungsöffnung entlang dem Spandurchtrittsfenster in Richtung zu der Saugluftquelle führt.

Der auf diesem radialen Strömungsweg geführte Hauptluftstrom verläuft somit im Wesentlichen in gleicher Richtung wie die natürliche Flugbahn der Späne, die durch die Spanaufnahmeöffnung des Werkzeuges und durch das Spandurchtrittsfenster hindurch in den Absaugkanal gelangen. Sobald die Späne durch das Spandurchtrittsfenster hindurchtreten, sind sie im Übrigen einer Fliehkraftwirkung der im hohlen Innenraum des Werkzeuges befindlichen Luftmasse entzogen. Da die Späne unmittelbar nach ihrer Erzeugung durch das Werkzeug zudem bereits eine beachtliche kinetische Energie besitzen und weder abgebremst noch wesentlich umgelenkt werden, kann ihre kinetische Energie direkt zur Spanableitung genutzt werden. Mit anderen Worten unterstützen die Späne selbst gewissermaßen aktiv die Spanabfuhr. Weil zusätzlich der Hauptluftstrom weitgehend gleichsinnig mit der Spanflugbahn strömt, ist für den weiteren Spanabtransport wiederum nur eine geringe kinetische Energie des Luftmassenstroms erforderlich. Dies hat insgesamt zur Folge, dass die Effizienz der Spanabfuhr wesentlich erhöht und gleichzeitig die für den Spanabtransport erforderliche Gesamtleistung der Absaugeinrichtung beziehungsweise der Saugluftquelle erheblich reduziert werden kann. Da der Hauptluftstrom darüber hinaus an der Innenseite des Absaugkanals an dem Spandurchtrittsfenster entlang streicht und somit keine Toträume entstehen, wird zudem ein unerwünschtes Festsetzen oder Ansammeln von Spänen an Rändern und Kanten des Spandurchtrittsfensters oder daran angrenzender Kanalbereiche zuverlässig verhindert.

Es hat sich darüber hinaus als günstig erwiesen, dass sich der Absaugkanal ausgehend von dem Spandurchtrittsfenster oder der Hilfsluft-Einspeisungsöffnung und bezogen auf die Rotationsachse des Werkzeuges im Wesentlichen in radialer Richtung kreisbogenartig oder wendelartig um die Rotationsachse herum erstreckt. Unter einem kreisbogenartigen oder wendelartigen Verlauf des Absaugkanals ist im Sinne der Erfindung auch eine spiralförmige Erstreckung des Absaugkanals zu verstehen. Der Absaugkanal kann nur teilweise, im Wesentlichen vollständig oder sogar in mehreren Windungen um die Rotationsachse herum geführt sein. Diese Bauart ermöglicht wiederum eine an die im Absauggehäuseinneren vorherrschende natürliche Spanflugbahn angepasste Hauptluftströmungsführung, gestattet aber überdies eine sehr kompakte und strömungstechnisch günstige Ausgestaltung des Absauggehäuses und des Absaugkanals. Aus diesem Grund sind die Späne selbst bei einer im Vergleich zu konventionellen Vorrichtungen geringen Leistung der Saugluftquelle zuverlässig absaugbar, da sie dem zuvor beschriebenen Verlauf des Absaugkanals sowie der im Absaugkanal vorherrschenden Strömung leicht folgen.

In diesem Zusammenhang hat es sich auch als positiv erwiesen, den Absaugkanal derart auszugestalten, dass die Drallrichtung der kreisbogenartigen oder wendelartigen Erstreckung des Absaugkanals und die Rotationsrichtung des Werkzeuges gleichsinnig sind, denn die Rotationsrichtung korrespondiert bei dieser Werkzeugart ebenfalls mit der natürlichen Spanflugbahn im Werkzeug- bzw. Absauggehäuseinneren.

Das Absauggehäuse weist vorzugsweise mindestens einen Neben-Absaugkanal auf, der mit wenigstens einer an einem außerhalb des Werkzeuges befindlichen Absauggehäuseabschnitt vorgesehenen Absauggehäuse-Nebenöffnung verbunden ist, wobei der Neben-Absaugkanal einen Strömungsweg für einen Nebenluftstrom definiert und in einen bezogen auf die Absaugrichtung stromabwärts von dem Spandurchtrittsfenster entfernten Absaugkanalabschnitt in den Absaugkanal mündet. Mit Hilfe des Neben-Absaugkanals und der Absauggehäuse-Nebenöffnung können außerhalb des Werkzeuges bzw. außerhalb des in den hohlen Innenraum des Werkzeuges eingreifenden Teils des Absauggehäuses auftretende Späne, die nicht in den hohlen Innenraum des Werkzeugs und/oder durch das Spandurchtrittsfenster in den Absaugkanal gelangt sind, erfasst und ebenfalls abgeleitet werden. Die Zusammenführung von Nebenluftstrom und Hauptluftstrom an einem bezogen auf die Absaugrichtung stromabwärts von dem Spandurchtrittsfenster entfernten Absaugkanalabschnitt stellt sicher, dass der Nebenluftstrom den Hauptluftstrom in der Nähe des Spandurchtrittsfensters nicht nachteilig beeinflusst. Da der Neben-Absaugkanal in den Absaugkanal mündet, ist für den Betrieb des Neben-Absaugkanals keine separate Saugluftquelle erforderlich. Es kann vielmehr die gleiche Saugluftquelle genutzt werden, die für den Absaugkanal selbst Anwendung findet. Grundsätzlich kann der Neben-Absaugkanal selbstverständlich auch an eine separate Absaugeinrichtung bzw. Saugluftquelle angeschlossen sein.

Für bestimmte Anwendungsfälle hat es sich als günstig erwiesen, dass der bezogen auf die Rotationsrichtung vordere Fensterrand des Spandurchtrittsfensters im Wesentlichen konkav ausgeschnitten bzw. geformt ist. Der vordere Fensterrand ist derjenige Rand, auf den die Schneiden des rotierenden Werkzeuges zulaufen. Es hat sich gezeigt, dass diese Ausgestaltungsweise unter anderem zu einer weiteren Reduzierung der Lärmemission des Werkzeuges beiträgt.

Ein besonders vorteilhaftes Ausgestaltungsmerkmal der erfindungsgemäßen Vorrichtung sieht vor, dass das Spandurchtrittsfenster mindestens einen unregelmäßig geformten Fensterrand besitzt. Auf diese Weise wird ein infolge der Rotation des Werkzeuges und der Wirkung der Saugluftquelle pulsierend durch das Spandurchtrittsfenster hindurch in den Absaugkanal des Absauggehäuses strömender Außenluft-Strom gewissermaßen zwangsweise an dem unregelmäßig geformten Fensterrand verwirbelt. Gleichzeitig wird eine infolge der Rotation des Werkzeuges in dessen hohlen Innenraum mitgeschleppte und an der Außenseite des in den hohlen Innenraum des Werkzeuges ragenden Absauggehäuses und an dem Spandurchtrittsfenster entlang strömende Luftschicht durch den unregelmäßig geformten Fensterrand zwangsweise verwirbelt. Es hat sich gezeigt, dass durch diese bauliche Maßnahme die bei konventionellen Vorrichtungen und Werkzeugen auftretenden negativen akustischen Schwingungserscheinungen erheblich reduziert werden können.

Die zuvor beschriebene positive Wirkung des unregelmäßig geformten Fensterrandes kommt besonders dann zur Geltung, wenn der unregelmäßig geformte Fensterrand an einer sich quer zur Rotationsrichtung des Werkzeuges erstreckenden Seite des Spandurchtrittsfensters ausgebildet ist. Es wird an dieser Stelle jedoch ausdrücklich angemerkt, dass der unregelmäßig geformte Fensterrand nicht ausschließlich auf diese Anordnung beschränkt ist. Ebenso können auch die anderen Fensterränder unregelmäßig geformt sein. In diesem Zusammenhang ist insbesondere eine Variante bevorzugt, bei welcher sowohl der in Bezug auf die Rotationsrichtung vordere als auch hintere Fensterrand unregelmäßig geformt ist.

Der vorher genannte unregelmäßig geformte Fensterrand kann beispielsweise in der Gestalt von zahnartigen oder zackenförmigen Vorsprüngen und Ausnehmungen realisiert werden. Hierbei können die Vorsprünge und Ausnehmungen regelmäßig oder unregelmäßig geformt sein und gleiche oder unterschiedliche Formen, Abmessungen und Verteilungen über den jeweiligen Fensterrand hinweg aufweisen. Gemäß einem weiteren bevorzugten Ausgestaltungsmerkmal der erfindungsgemäßen Vorrichtung sind die zahnartigen Vorsprünge und/oder Ausnehmungen wellenförmig ausgebildet. Mischformen aus den zuvor beschriebenen Ausgestaltungsformen des unregelmäßig geformten Fensterrandes sind ebenfalls denkbar. Zudem können die unregelmäßig geformten Fensterränder des Spandurchtrittsfensters eine gleichartige oder aber voneinander abweichende unregelmäßige Form bzw. Gestalt aufweisen.

Es hat sich darüber hinaus als vorteilhaft herausgestellt, dass zumindest der bezogen auf die Rotationsrichtung des Werkzeuges vordere Fensterrand (also derjenige Fensterrand, auf den die Werkzeugschneiden im Betrieb zu laufen) des Spandurchtrittsfensters eine Span-Abstreifeinrichtung aufweist. Die Bereitstellung einer derartigen Abstreifeinrichtung an den anderen Fensterrändern des Spandurchtrittsfensters ist ebenfalls möglich. Die Span-Abstreifeinrichtung kann eine separate Einrichtung oder aber integraler Bestandteil des jeweiligen Fensterrandes und/oder des Absauggehäuses sein. Im Fall einer Integralbauweise kann insbesondere der weiter oben beschriebene, unregelmäßig geformte Fensterrand des Spandurchtrittsfensters als eine derartige integrale Span-Abstreifeinrichtung fungieren. Auch beweglich angeordnete Abstreifeinrichtungen mit oder ohne Eigenantrieb sowie düsenartige Elemente, die einen Luft-, Gas- oder Flüssigkeitsstrom ausstoßen, sind im Sinne der Erfindung als Span-Abstreifeinrichtungen zu verstehen.

Vorzugsweise weist der vordere Fensterrand eine bezogen auf die Rotationsachse radiale, erste Abstreifkante auf, welche bezogen auf die radiale Erstreckung des hinteren Fensterrandes radial über den hinteren Fensterrand hinausragt. Besitzt das Absauggehäuse beispielsweise eine zylindrische Form und ist das Spandurchtrittsfenster an einer zylindrischer Außenumfangsfläche des Absauggehäuses vorgesehen, so steht die radiale, erste Abstreifkante über den Zylinderdurchmesser hinaus hervor. Die radiale, erste Abstreifkante ist vorzugsweise als unregelmäßig geformter Fensterrand ausgebildet, so dass die Kante bzw. der Fensterrand eine vorteilhafte Doppelfunktion übernehmen kann.

Es hat sich überdies als günstig erwiesen, dass bei der erfindungsgemäßen Vorrichtung der vorderen Fensterrand eine bezogen auf die Rotationsachse des Werkzeuges axiale, zweite Abstreifkante aufweist, welche über eine axiale Stirnseite des in den hohlen Innenraum des Werkzeuges eingreifenden Abschnitts des Absauggehäuses hinausragt. Diese zweite Abstreifkante dient vorteilhafterweise dazu, Späne oder Spanreste abzustreifen und durch das Spandurchtrittsfenster in den Absaugkanal zu leiten, die in axialer Richtung an der Außenseite des in den hohlen Innenraum des Werkzeuges eingreifenden Teils des Absauggehäuses zwischen die Werkzeuginnenflächen und die Absauggehäuseaußenflächen und zu einem stirnseitigen Bereich des Absauggehäuses gelangen. Die axiale, zweite Abstreifkante entfernt somit zuverlässig Spanreste, die sich ansonsten auf unerwünschte Weise an einem dem stirnseitigen Bereich des Absauggehäuses benachbarten Abschnitt des hohlen Innenraums des Werkzeuges ansammeln und dort ablagern würden.

Die zuvor genannten Abstreifkanten können entweder scharfkantig oder stumpf ausgebildet sein und eine schneidenartige, klingenartige oder sogar hakenartige Form aufweisen.

In Einklang mit einem anderen Ausgestaltungsmerkmal der erfindungsgemäßen Vorrichtung weist die axiale Stirnseite des in den hohlen Innenraums des Werkzeuges eingreifenden Abschnitts des Absauggehäuses eine diesen Abschnitt axial verschließende Stirnfläche auf, wobei in der Stirnfläche eine Stirnöffnung vorgesehen ist, welche in den Absaugkanal mündet. In dieser Stirnfläche kann auch die bereits weiter oben beschriebene Durchgangsöffnung oder Vertiefung zum Aufnehmen eines Antriebsmittels wie beispielsweise einer Welle oder Achse des Werkzeuges vorgesehen sein. Der durch die Stirnfläche gebildete Verschluss kann integral mit den übrigen Abschnitten des Absauggehäuses ausgebildet oder in der Art eines Deckels lösbar ausgestaltet sein, was einen Zugang zu dem Absauggehäuseinneren ermöglicht, ohne dabei das gesamte Absauggehäuse von anderen Vorrichtungskomponenten demontieren zu müssen. Durch die Bereitstellung der Stirnfläche und des auf diese Weise gebildeten axialen Verschlusses des Absauggehäuses ist zudem besonders einfach eine topfartige Form des in den hohlen Innenraum des Werkzeuges eingreifenden Abschnitts des Absauggehäuses realisierbar. Dies verhindert ein unkontrolliertes Ansaugen von Luft an dafür nicht vorgesehenen Stellen des Absauggehäuses und trägt folglich zur Realisierung bestimmter gewünschter Strömungszustände innerhalb des Absauggehäuses bei. Durch die Stirnöffnung wiederum lassen sich Späne oder Spanreste, die möglicherweise auf die Stirnfläche des Absauggehäuses bzw. in den Bodenbereich eines topfartig geformten Werkzeuges gelangen, abführen und in den Absaugkanal leiten. Der Zwischenraum zwischen den Werkzeuginnenflächen und den in den hohlen Werkzeuginnenraum hinein ragenden Absauggehäuseaußenflächen kann somit weitgehend frei von Spänen gehalten werden, was auch Verschleißerscheinungen reduziert.

Vorzugsweise mündet die Stirnöffnung in das Spandurchtrittsfenster. Über die Stirnöffnung abgeleitete Späne oder Spanreste können somit direkt durch das Spandurchtrittsfenster hindurch in den Absaugkanal abgeleitet werden; und für den Absaugbetrieb der Stirnöffnung sind keine zusätzlichen Kanäle und/oder eine zusätzliche Saugkraftquelle erforderlich.

Gemäß einem noch anderen bevorzugten Ausgestaltungsdetail der erfindungsgemäßen Vorrichtung mündet die Stirnöffnung im Bereich der radialen, ersten Abstreifkante und/oder im Bereich der axialen, zweiten Abstreifkante in das Spandurchtrittsfenster. Aufgrund der durch die Stirnöffnung hindurchtretenden Strömung wird somit die Wirkung der betreffenden Abstreifkanten unterstützt, und Späne oder Spanreste, die von der jeweiligen Abstreifkante nicht erfasst werden, lassen sich infolge der Strömungszustände am Rand des Spandurchtrittsfensters, die von der durch die Stirnöffnung fließenden Luftströmung induziert werden, erfassen und ableiten.

In einer besonders vorteilhaften Ausführungsform der erfindungsgemäßen Vorrichtung ist diese des Weiteren mit einer Absaughaube versehen, welche das Werkzeug zumindest teilweise, in bestimmten Anwendungsfällen jedoch auch im Wesentlichen vollständig umgibt bzw. umschließt, was in radialer und/oder axialer Werkzeugrichtung erfolgen kann. Mit Hilfe der Absaughaube lassen sich an der Außenseite beziehungsweise außerhalb des Werkzeuges und/oder außerhalb des Schneidenflugkreises und/oder außerhalb des eigentlichen Absauggehäuses auftretende Späne auffangen, die nicht von dem in den hohlen Innenraum des Werkzeuges eingreifenden Absauggehäuse erfasst werden können. Bezogen auf das Werkzeug beziehungsweise den Werkzeugkörper ist auf diese Weise also eine externe Spanabführung oder eine Art außenliegende Spanführung realisierbar.

Die Absaughaube kann einen oder mehrere Absaughaubenkanäle aufweisen, beispielsweise in der Form von Teilkanälen, mehreren Kanalabschnitten, Nuten, Leitmitteln wie etwa Leitblechen, und dergleichen. Somit besteht die Möglichkeit, Absaugungen gleichzeitig an unterschiedlichen Stellen vorzunehmen sowie die Spanführung gezielt zu beeinflussen und die Späne zu bestimmten gewünschten Stellen der Vorrichtung zu leiten.

Vorzugsweise ist die Absaughaube an den Neben-Absaugkanal des Absauggehäuses angeschlossen. Dies gestattet es, die für das Absauggehäuse vorgesehene Absaugeinrichtung bzw. Saugluftquelle auch für den Betrieb der Absaughaube zu nutzen. Eine separate Absaugeinrichtung oder Saugluftquelle ist damit nicht erforderlich und die aus dem Absauggehäuse und der Absaughaube gebildete Funktionseinheit kann sehr kompakt ausgebildet werden.

Gemäß einem weiteren Ausgestaltungsmerkmal der erfindungsgemäßen Vorrichtung überragt die Absaughaube das Werkzeug in axialer Richtung. Die Absaughaube kann somit auch Späne erfassen, die zu einem von dem eigentlichen Wirkungsort des Werkzeuges entfernten axialen räumlichen Bereich geschleudert wurden.

In einer zusätzlichen vorteilhaften Ausgestaltungsform der erfindungsgemäßen Vorrichtung ist vorgesehen, dass die Absaughaube einen unregelmäßig geformten Absaughauben-Öffnungsrand besitzt. Ähnlich wie bei dem weiter oben beschriebenen unregelmäßig geformten Fensterrand des Spandurchtrittsfensters kann der unregelmäßig geformte Absaughauben-Öffnungsrand ebenfalls zahnartige oder zacken- oder wellenartige Vorsprünge und Ausnehmungen aufweisen. Diese Vorsprünge können wiederum regelmäßig oder unregelmäßig geformt und/oder verteilt sein und/oder gleiche oder unterschiedliche Gestalten und Abmessungen aufweisen. Mischformen aus den zuvor genannten Varianten sind ebenfalls möglich. Durch diese Maßnahme können nachteilige akustische Effekte infolge eines durch die Absaughaubenöffnung einströmenden Luftstroms (hier Zusatzluftstrom genannt) verhindert und die dadurch erzeugte Schallemission erheblich reduziert werden.

Insbesondere in Verbindung mit der Verarbeitung von geradlinigen Werkstückkanten oder -rändern hat sich eine Ausgestaltungsvariante der erfindungsgemäßen Vorrichtung bewährt, bei der sich der Absaughauben-Öffnungsrand bezogen auf die Rotationsachse und einen Schneidenflugkreis-Durchmesser bzw. Schneidendrehkreis-Durchmesser des Werkzeuges im Wesentlichen tangential erstreckt und von dem Schneidenflugkreis-Durchmesser zur Rotationsachse hin geringfügig zurückversetzt ist. In der Praxis entspricht die Größe dieses Versatzes einem Maß, welches etwas größer als die Bearbeitungstiefe der Werkzeugschneiden ist. Im laufenden Betrieb der Vorrichtung liegt deshalb der sich tangential erstreckende Absaughauben-Öffnungsrand der zu bearbeitenden geradlinigen Werkstückkante über einen sehr kleinen Zwischenraum hinweg direkt gegenüber, wodurch die am Wirkungsort des Werkzeuges erzeugten Späne, die nicht durch die Spanaufnahmeöffnung des Werkzeuges und durch das Spandurchtrittsfenster des Absauggehäuses in den Absaugkanal gelangen, hervorragend erfasst und in einem hohen Maße abgeleitet werden können.

Das der Erfindung zugrunde liegende technische Problem wird ferner gelöst durch ein erfindungsgemäßes Verfahren mit den Merkmalen des Anspruchs 29.

Dieses Verfahren zum spanenden Bearbeiten von Werkstücken, insbesondere von Werkstücken aus Holzwerkstoffen, Kunststoff oder dergleichen, mittels einer Vorrichtung nach einem der Ansprüche 1 bis 28, umfasst folgende Schritte zum Absaugen von beim Bearbeiten entstehenden Spänen:
Erzeugen eines im wesentlichen konstanten, saugenden und innerhalb des Absaugkanals entlang dem Spandurchtrittsfenster strömenden Hauptluftstroms.

Das erfindungsgemäße Verfahren bietet im wesentlichen die gleichen Vorteile wie diejenigen der bereits weiter oben erläuterten erfindungsgemäßen Vorrichtung.

Gemäß einem bevorzugten vorteilhaften Ausführungsmerkmal des erfindungsgemäßen Verfahrens umfasst dieses einen Verfahrensschritt, bei dem der Hauptluftstrom auf einem bezogen auf die Rotationsachse des Werkzeugs im Wesentlichen radialen Strömungsweg ausgehend von der Hilfsluft-Einspeisungsöffnung entlang dem Spandurchtrittsfenster in Richtung zu der Saugluftquelle geleitet wird. Auf diese Weise verläuft der Hauptluftstrom im Wesentlichen in gleicher Richtung wie die natürliche Flugbahn der durch das Spandurchtrittsfenster in den Absaugkanal eingetretenen Späne, welche auf diese Weise die Spanabfuhr gewissermaßen aktiv unterstützen. Dies hat wiederum zur Folge, das die Effizienz der Spanabfuhr erhöht und die für den Spanabtransport erforderliche Gesamtleistung der Absaugeinrichtung beziehungsweise Saugluftquelle reduziert werden kann. Da der Hauptluftstrom an der Innenseite des Absaugkanals an dem Spandurchtrittsfenster entlang streicht und somit keine Toträume entstehen, wird zudem ein unerwünschtes Festsetzen oder Ansammeln von Spänen an Rändern und Kanten des Spandurchtrittsfensters oder daran angrenzender Kanalbereiche zuverlässig verhindert.

Darüber hinaus umfasst das erfindungsgemäße Verfahren eine Variante mit einem Verfahrensschritt, der durch Erzeugen und Bereitstellen von mindestens einem im wesentlichen konstanten, saugenden Nebenluftstrom innerhalb des mit der Absauggehäuse-Nebenöffnung verbundenen Neben-Absaugkanals charakterisiert ist. Die Erzeugung und Bereitstellung des Nebenluftstrom bietet die Möglichkeit, eine zusätzliche Spanabsaugung auch an anderen Stellen innerhalb und/oder außerhalb des in den hohlen Innenraum des Werkzeugs eingreifenden Abschnitts des Absauggehäuses vorzunehmen. Insbesondere können auf diese Weise auch Späne erfasst werden, welche an einem externen Bereich des Werkzeuges auftreten und nicht in den in den hohlen Innenraum des Werkzeugs und/oder durch das Spandurchtrittsfenster in den Absaugkanal gelangen.

In einem weiteren bevorzugten Verfahrensschritt werden der Hauptluftstrom und der Nebenluftstroms an einem bezogen auf die Absaugrichtung stromabwärts von dem Spandurchtrittsfenster entfernten Strömungsabschnitt zusammengeführt. Dies stellt zum einen sicher, dass der Neben-Luftstrom den Hauptluftstrom in der Nähe des Spandurchtrittsfensters nicht nachteilig beeinflusst, und bietet zum anderen die Möglichkeit, für die Generierung und Bereitstellung des Nebenluftstroms ohne zusätzlichen Aufwand diejenigen Mittel zu nutzen, die auch für die Erzeugung und Breitstellung des Hauptluftstroms Anwendung finden. Grundsätzlich kann der Nebenluftstrom jedoch auch mit Hilfe separater Mittel generiert und bereitgestellt werden.

Das erfindungsgemäße Verfahren bietet des Weiteren eine vorteilhafte Ausführungsvariante, die einen Verfahrensschritt umfasst, der durch ein zwangsweises Verwirbeln eines infolge der Rotation des Werkzeuges pulsierend durch das Spandurchtrittsfenster hindurch in den Absaugkanal des Absauggehäuses strömenden Außenluft-Stroms an mindestens einem Fensterrand des Spandurchtrittsfensters gekennzeichnet ist. Auf diese Weise können nachteilige akustische Schwingungserscheinungen am Spandurchtrittsfenster vermieden und die gesamte Schallemission des Werkzeuges beim Ausführen des Verfahrens erheblich reduziert werden.

Insbesondere in diesem Zusammenhang ist auch ein erfindungsgemäßer Verfahrensschritt als nützlich und hilfreich anzusehen, bei dem eine infolge der Rotation des Werkzeuges in dessen hohlen Innenraum mitgeschleppte und an einer Außenseite des in den hohlen Innenraum des Werkzeugs ragenden Absauggehäuses und an dem Spandurchtrittsfenster entlang strömende Luftschicht an mindestens einem Fensterrand des Spandurchtrittsfensters zwangsweise verwirbelt wird. Auch dies trägt zu einer Verminderung von Schallemissionen bei.

In einem noch anderen vorteilhaften Verfahrensschritt des erfindungsgemäßen Verfahrens wird der pulsierend einströmende Außenluft-Strom mit dem im wesentlichen konstanten Hauptluftstrom in dem Absaugkanal vermischt. Durch den daraus resultierenden Überlagerungseffekt können Pulsspitzen von pulsierenden akustischen Schwingungserscheinung, welche von dem pulsierenden Strömungszustand herrühren, gemindert und resonanzartige Schwingungszustände vermieden werden. Dies trägt wiederum zu einer Reduzierung von Schallemissionen und unangenehmen Geräuschen bei.

Das erfindungsgemäße Verfahren umfasst des Weiteren einen vorteilhaften Verfahrensschritt, der gekennzeichnet ist durch Erzeugen und Bereitstellen eines im wesentlichen konstanten, saugenden Zusatzluftstrom an einer Außenseite des Werkzeuges. Durch diese Maßnahme können auch an einem außerhalb des Werkzeugs und/oder und/oder außerhalb des Schneidenflugkreises und/oder außerhalb des Absauggehäuses befindlichen Raumbereich und/oder an den Außenflächen des Werkzeuges selbst auftretende Späne abgesaugt werden, die sich nicht durch den Hauptluftstrom erfassen lassen. Es ist eine außenliegende Spanführung realisierbar.

Es wird an dieser Stelle darauf hingewiesen, dass die Erfindung zwischen einem Nebenluftstrom und einem Zusatzluftstrom unterscheidet, da der Nebenluftstrom ein Luftstrom sein kann, der nicht zwingenderweise außerhalb des Absauggehäuses strömen muss. Der Zusatzluftstrom hingegen wird als solcher Luftstrom verstanden, der an einer Außenseite des Werkzeuges und damit in der Regel auch außerhalb des eigentlichen Absauggehäuses strömt.

Der Zusatzluftstrom kann unter bestimmten Umständen jedoch auch einen Nebenluftstrom darstellen oder in den Nebenluftstrom übergehen. Dies ist zum Beispiel dann der Fall, wenn die Absaughaube oder mindestens einer ihrer Kanäle direkt an die Absauggehäuse-Nebenöffnung eines Neben-Absaugkanals angeschlossen ist. Ist sowohl ein Zusatzluftstrom als auch ein davon separater Nebenluftstrom vorhanden, so können diese beiden Ströme zusammengeleitet und auf diese Weise die von ihnen mitgeführten Späne auf einem gemeinsamen weiteren Strömungsweg abgeleitet werden, was ein späteres Sammeln und Entsorgen der Späne vereinfacht. Überdies bietet dieser Verfahrensschritt die Möglichkeit, den Zusatzluftstrom mit Hilfe des im Neben-Absaugkanal strömenden Nebenluftstroms zu erzeugen, so dass auf separate Mittel zur Erzeugung des Zusatzluftstrom verzichtet werden kann. Eine völlig separate Stromführung für den Zusatzluftstrom und/oder separate Mittel zu dessen Generierung sind jedoch ebenso denkbar.

Vorzugsweise wird der Zusatzluftstroms an mindestens einem Absaughauben-Öffnungsrand zwangsweise verwirbelt. Dadurch können nachteilige akustische Effekte infolge des durch die Absaughaubenöffnung einströmenden Zusatzluftstroms vermieden und unerwünschte Schallemissionen reduziert werden.

Schließlich umfasst das erfindungsgemäße Verfahren auch einen vorteilhaften Verfahrensschritt, der gekennzeichnet ist durch zwangsweises Verwirbeln einer infolge der Rotation des Werkzeuges an dessen Außenseite mitgeschleppten und an einer Absaughauben-Öffnung entlang strömenden Luftschicht an dem mindestens einen Absaughauben-Öffnungsrand. Auch dies trägt auf positive Art und Weise zur Vermeidung nachteiliger akustischer Effekte und zu einer Reduzierung von Schallemissionen bei.

Bevorzugte Ausführungsbeispiele der Erfindung mit zusätzlichen Ausgestaltungsdetails sind nachfolgend unter Bezugnahme auf die beigefügten Zeichnungen näher beschrieben und erläutert.

### Kurze Beschreibung der Zeichnungen

Es zeigt:
- Fig. 1: eine schematische Perspektivansicht eines wesentlichen Teilbereichs einer erfindungsgemäßen Vorrichtung gemäß einer ersten Ausführungsform, mit einem Werkzeug und einem Absauggehäuse;
- Fig. 2: eine Unteransicht des Absauggehäuses entlang der Linie II-II von Fig. 1;
- Fig. 3: eine schematische Perspektivansicht des Werkzeugs der erfindungsgemäßen Vorrichtung von Fig. 1 und 2;
- Fig. 4: eine schematische Draufsicht der erfindungsgemäßen Vorrichtung gemäß der ersten Ausführungsform im Arbeitsbetrieb;
- Fig. 5: eine schematische Draufsicht einer zweiten Ausführungsform der erfindungsgemäßen Vorrichtung; und
- Fig. 6: eine schematische Perspektivansicht eines Absauggehäuses mit einer daran angeschlossenen externen Absaughaube mit außenliegender Spanführung der erfindungsgemäßen Vorrichtung.

### Beschreibung von bevorzugten Ausführungsbeispielen der Erfindung

In der nachfolgenden Beschreibung und in den Figuren werden zur Vermeidung von Wiederholungen gleiche Bauteile und Komponenten auch mit gleichen Bezugszeichen gekennzeichnet, sofern keine weitere Differenzierung erforderlich ist.

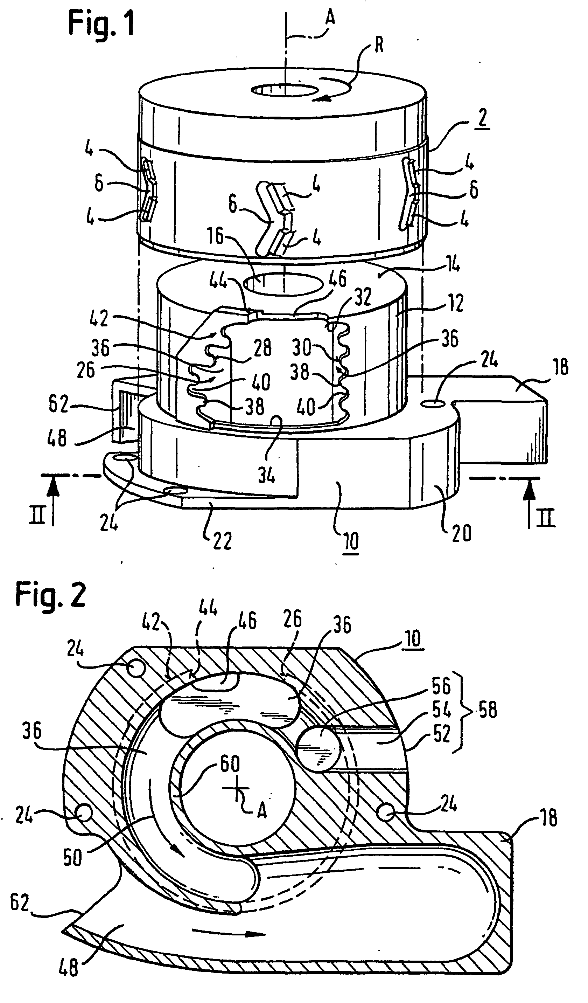

Fig. 1 zeigt eine schematische Perspektivansicht eines wesentlichen Teilbereichs einer ersten Ausführungsform einer erfindungsgemäßen Vorrichtung zum spanenden Bearbeiten von Werkstücken, insbesondere von Werkstücken aus Holzwerkstoffen, Kunststoff oder dergleichen. Die Vorrichtung umfasst ein spanabtragendens, rotierendes und im Wesentlichen als dünnwandiger, zylindrischer, topfartiger Hohlkörper ausgebildetes Werkzeug 2. Die Rotationsachse des Werkzeugs 2, die hier vertikal verläuft, ist mit dem Bezugszeichen A gekennzeichnet. Die Rotationsrichtung des Werkzeugs 2 ist durch einen Pfeil R angedeutet. Das Werkzeug 2 ist im vorliegenden Fall mit mehreren geometrisch bestimmten Schneiden 4 ausgerüstet, die gleichmäßig am radialen Außenumfang des Werkzeuges 2 beziehungsweise dessen Werkzeuggrundkörper angeordnet und verteilt sind. Ein an eine jeweilige Schneide 4 angrenzender Bereich des Werkzeugs 2 ist durch eine Spanaufnahmeöffnung 6 zum Durchleiten von Spänen in einen hohlen Innenraum 8 des Werkzeugs 2 durchbrochen.

Die Vorrichtung umfasst ferner eine Absaugeinrichtung mit einem ortsfesten oder stationären Absauggehäuse 10. Dieses Absauggehäuse 10 ist im Wesentlichen als dünnwandiger Hohlkörper ausgebildet und greift mit einen zylindrischen, topfartig geformten Absauggehäuseabschnitt 12, nachfolgend kurz Topfabschnitt 12 genannt, teilweise in den hohlen Innenraum 8 des Werkzeugs 2 ein. Der Topfabschnitt 12, der stirnseitig durch eine Stirnfläche 14 weitgehend verschlossen ist, füllt den hohlen Werkzeuginnenraum 8 im Wesentlichen vollständig aus, so dass zwischen den Außenflächen des Topfabschnitts 12 und den Innenflächen des hohlen Werkzeuginnenraums 8 nur ein geringfüger Spalt verbleibt, der eine ungehinderte Rotation des Werkzeugs 2 um den Topfabschnitt 12 herum gewährleistet. An der Stirnseite des Topfabschnitts 12 ist eine Durchgangsöffnung 16 für eine nicht dargestellte Antriebswelle des Werkzeugs 2 vorgesehen. Die Durchgangsöffnung 16 reicht durch das gesamte Absauggehäuse 10 hindurch. Das Absauggehäuse 10 steht über einen Anschluss 18 mit einer nicht dargestellten Saugluftquelle in Verbindung. Der außerhalb des Werkzeugs 2 befindliche Bereich des Absauggehäuses 10 weist eine Gehäusebasis 20 mit einen plattenförmigen Gehäusefuß 22 und Bohrungen 24 auf, über die das Absauggehäuse 10 an einem der Übersichtlichkeit halber nicht gezeigten Vorrichtungsgestell befestigt ist.

Wie in der Fig. 1 gut erkennbar, weist der in den hohlen Innenraum 8 des Werkzeugs 2 eingreifende oder ragende Topfabschnitt 12 im Bereich eines der jeweiligen Schneide 4 zugeordneten Wirkungsortes des Werkzeugs 2 ein Spandurchtrittsfenster 26 mit mehreren Fensterrändern 28, 30, 32, 34 auf. Das Spandurchtrittsfenster 26 mündet in einen nachfolgend noch genauer beschriebenen Absaugkanal 36 des Topfabschnitts 12 beziehungsweise des Absauggehäuses 10. Das Spandurchtrittsfenster 26 erstreckt sich bezogen auf die Werkzeugachse A in axialer Richtung über im Wesentlichen die gesamte Höhe des in den hohlen Innenraum 8 des Werkzeugs 2 eingreifenden Topfabschnitts 12. Die bezogen auf die Rotationsrichtung R am radialen Außenumfang des Topfabschnitts 12 gemessene mittlere Breite des Spandurchtrittsfensters 26 ist kleiner als die Teilung der Schneiden 4 am Werkzeugumfang.

In der Fig. 1 ist der vordere Fensterrand des Spandurchtrittsfensters mit dem Bezugszeichen 28 und der hintere Fensterrand mit dem Bezugszeichen 30 gekennzeichnet. Beide Ränder 28, 30 erstrecken sich im wesentlichen quer zur Rotationsrichtung R des Werkzeugs 2. Es ist aus der Zeichnung ersichtlich, dass der vordere Fensterrand 28 von seiner Grundgestalt her annähernd konkav ausgeschnitten ist, während der hintere Fensterrand 30 von seiner Grundgestalt her weitgehend geradlinig ist und annähernd parallel zur Rotationsachse A verläuft. Darüber hinaus besitzen der vordere 28 und hintere Fensterrand 30 jedoch jeweils eine unregelmäßige Randform, die durch zahnartige oder zackenartige Vorsprünge 38 und Ausnehmungen 40 gebildet ist, die aus der jeweiligen, zuvor erwähnten Grundgestalt des betreffenden Randes 28, 30 herausgearbeitet sind. Die zahnartigen oder zackenartigen Vorsprünge 38 und Ausnehmungen 40 sind im vorliegenden Ausführungsbeispiel wellenförmig.

Der vordere Fensterrand 28 ist zusätzlich mit einer Span-Abstreifeinrichtung ausgestattet, die in diesem Fall durch eine bezogen auf die Rotationsachse A radiale, erste Abstreifkante 42 des vorderen Fensterrandes 28 selbst gebildet ist. Diese erste Abstreifkante 42 ragt bezogen auf die radiale Erstreckung des hinteren Fensterrandes 30 radial über den hinteren Fensterrand 30 hinaus. Mit anderen Worten steht die erste Abstreifkante 42 geringfügig über die zylindrische, radiale Außenfläche des Topfabschnitts 12 hervor. Darüber hinaus ist am vorderen Fensterrand 28, und zwar am Übergangsbereich zum oberen Fensterrand 32, eine bezogen auf die Rotationsachse A des Werkzeugs axiale, zweite Abstreifkante 44 vorgesehen. Diese zweite Abstreifkante 44 ragt nach oben geringfügig über die axiale Stirnfläche 14 des Topfabschnitts 12 hinaus und besitzt in der Draufsicht (vgl. Fig. 2) eine leicht hakenartige Form.

In der Stirnfläche 12 des Topfabschnitts 12 ist eine Stirnöffnung 46 vorgesehen, welche in den Absaugkanal 36 und im Bereich der radialen, ersten Abstreifkante 42 sowie im Bereich der axialen, zweiten Abstreifkante 44 in das Spandurchtrittsfenster 26 mündet.

Der Fig. 2, welche eine Unteransicht des Absauggehäuses 10 entlang der Linie II-II von Fig. 1 zeigt, sind weitere Details des Absauggehäuses 10 zu entnehmen. Die Unterseite des Absauggehäuses 10 ist eben ausgebildet. Der Absaugkanal 36 sowie ein nachfolgend noch näher beschriebener Neben-Absaugkanal 48 sind durch nutenartige Vertiefungen oder Ausnehmungen gebildet, die ausgehend von der Unterseite in das Absauggehäuse 10 und dessen Topfabschnitt 12 hinein gearbeitet sind. Im vorliegenden Beispiel ist das Absauggehäuse 10 gewissermaßen halbschalenartig geformt und wird erst durch Befestigen an einem anderen korrespondierenden ortfesten Vorrichtungsteil verschlossen.

Der Absaugkanal 36 weist in einem bezogen auf die durch einen Pfeil 50 angedeutete Absaugrichtung stromaufwärts an das Spandurchtrittsfenster 26 angrenzenden Absaugkanalabschnitt eine Hilfsluft-Einspeisungsöffnung 52 auf. Die Hilfsluft-Einspeisungsöffnung 52 ist durch eine nutenartige Ausnehmung 54 in einem außerhalb des Topfabschnitts 12 befindlichen Absauggehäusebereich gebildet, die über eine Senkbohrung 56 mit dem Absaugkanal 36 in Verbindung steht. Die nutenartige Ausnehmung 54 und die Senkbohrung 56 bilden einen kurzen Hilfsluftkanal 58, über den die Hilfsluft-Einspeisungsöffnung 52 mit dem Absaugkanal 36 verbunden ist.

Wie die Fig. 2 des Weiteren zeigt, sind der Absaugkanal 36 und die Hilfsluft-Einspeisungsöffnung 52 beziehungsweise der Hilfsluftkanal 58 durch eine Trennwand 60 von der für die Werkzeugwelle vorgesehenen Durchgangsöffnung 16 abgegrenzt, so dass über diese Durchgangsöffnung 16 keine Luft angesaugt werden kann. Wie aus der Darstellung von Fig. 2 ferner hervorgeht, erstreckt sich der Absaugkanal 36 ausgehend von der Hilfsluft-Einspeisungsöffnung 52 bzw. dem Hilfsluftkanal 58 und bezogen auf die Rotationsachse A des Werkzeugs 2 im wesentlichen in radialer Richtung kreisbogenartig in etwa einer halben bis dreiviertel Windung um die Rotationsachse A herum. Die nutenartige Ausnehmung des Absaugkanals 36 besitzt hierbei eine geringfügige Steigung, so dass sich der freie Durchtrittsquerschnitt des Absaugkanals 36, wenn das Absauggehäuse 10 mit seinem korrespondierenden Vorrichtungsteil verbunden ist, zu der Saugluftquelle hin verkleinert. Der Absaugkanal 36 definiert so einen bezogen auf die Rotationsachse A des Werkzeugs 2 im wesentlichen radialen Strömungsweg, der ausgehend von der Hilfsluft-Einspeisungsöffnung 52 entlang dem Spandurchtrittsfenster 26 in Richtung zu der Saugluftquelle führt. Die Drallrichtung der kreisbogenartigen Erstreckung des Absaugkanals 36 und die Rotationsrichtung R des Werkzeuges 2 sind hierbei gleichsinnig.

Wie bereits zuvor erwähnt, besitzt das Absauggehäuse 10 einen Neben-Absaugkanal 48, der mit einer an einem außerhalb des rotierenden Werkzeugs 2 befindlichen Absauggehäuseabschnitt vorgesehenen Absauggehäuse-Nebenöffnung 62 verbunden ist. Die Absauggehäuse-Nebenöffnung 62 und der Neben-Absaugkanal 48 befinden sich im vorliegenden Beispiel im Bereich der Gehäusebasis 20 und damit an einen unteren Abschnitt des Absauggehäuses 10. Der Neben-Absaugkanal 48 definiert einen Strömungsweg für einen Nebenluftstrom und mündet in einen bezogen auf die Absaugrichtung 50 stromabwärts von dem Spandurchtrittsfenster 26 entfernten Absaugkanalabschnitt in den Absaugkanal 36. Auch der freie Durchtrittsquerschnitt des Neben-Absaugkanals 48 verkleinert sich zu der Saugluftquelle hin. Die Absauggehäuse-Nebenöffnung 62 kann zum Beispiel an eine in der Fig. 2 nicht gezeigte externe Absaughaube angeschlossen sein.

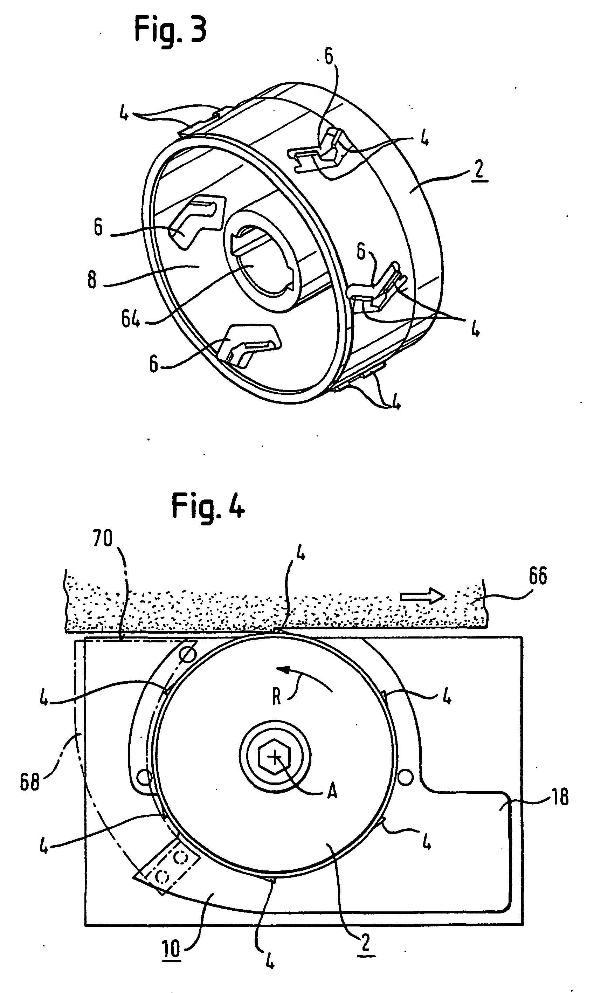

In der Fig. 3, die eine schematische Perspektivansicht des Werkzeugs 2 der erfindungsgemäßen Vorrichtung zeigt, ist nochmals besonders deutlich der hohle Werkzeuginnenraum 8, die Anordnung der Schneiden 4, die Spanaufnahmeöffnung 6 zum Durchleiten der Späne in den Werkzeuginnenraum, sowie eine Antriebswellenaufnahme 64 des Werkzeugs 2 zu erkennen.

Fig. 4 stellt eine schematische Draufsicht der erfindungsgemäßen Vorrichtung gemäß der ersten Ausführungsform im Arbeitsbetrieb dar. Dieser Abbildung ist die Anordnung des Werkzeugs 2 und des Absauggehäuses 10 in Bezug auf das zu bearbeitende Werkstück 66 (hier: ein plattenförmiges Werkstück mit geradlinigen Werkstückkanten) zu entnehmen. In der Fig. 4 ist durch gestrichelte Linien auch eine externe Absaughaube 68 angedeutet, die an die Absauggehäuse-Nebenöffnung 62 und den Neben-Absaugkanal 48 des Absauggehäuses 10 angeschlossen ist und das Werkzeug 2 in radialer und axialer Richtung teilweise umgibt. Die externe Absaughaube 68 bildet eine außenliegende Spanabführung.

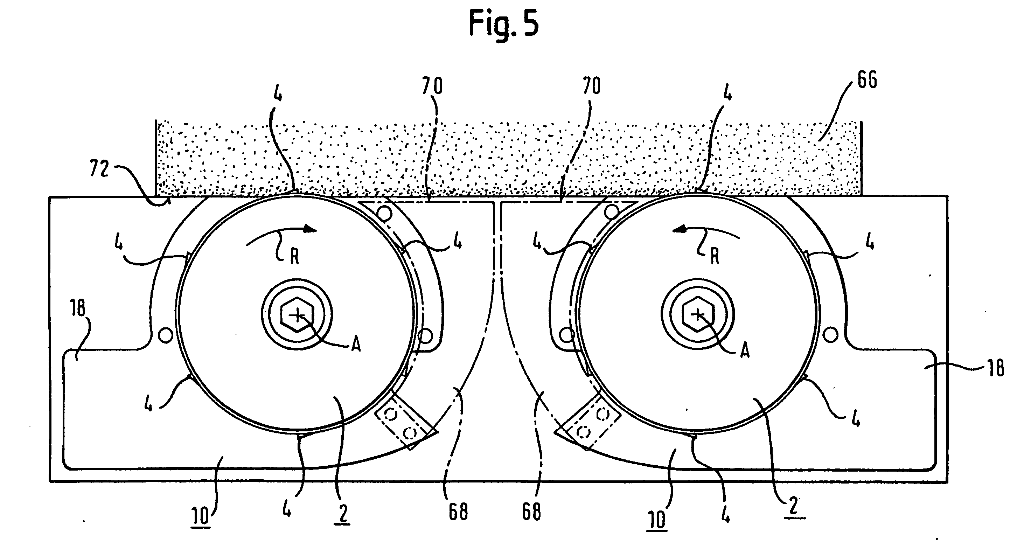

Fig. 5 zeigt eine schematische Draufsicht einer zweiten Ausführungsform der erfindungsgemäßen Vorrichtung. Diese Variante entspricht weitgehend der ersten Ausführungsform, jedoch sind zwei Werkzeuge 2, 2 mit Ihrem jeweiligen Absauggehäuse 10, 10 und ihrer externer Absaughaube 68, 68 spiegelbildlich nebeneinander angeordnet und bilden ein Bearbeitungsaggregat. Die Werkzeuge 2, 2 arbeiten gegenläufig. Die Absaughauben 68, 68 besitzen einen oberen und unteren Absaughauben-Öffnungsrand 70 , der sich jeweils bezogen auf die Rotationsachse A und einen Schneidenflugkreis-Durchmesser bzw. Schneidendrehkreis-Durchmesser des Werkzeuges 2 im Wesentlichen tangential erstreckt und von dem Schneidenflugkreis-Durchmesser zur Rotationsachse A hin geringfügig zurückversetzt ist. Der tangentiale Öffnungsrand 70 liegt der zu bearbeitenden geradlinigen Werkstückkante 72 des Werkstückes 66 daher unmittelbar über einen sehr kleinen Zwischenraum hinweg gegenüber, wie in der Abbildung gut zu erkennen ist.

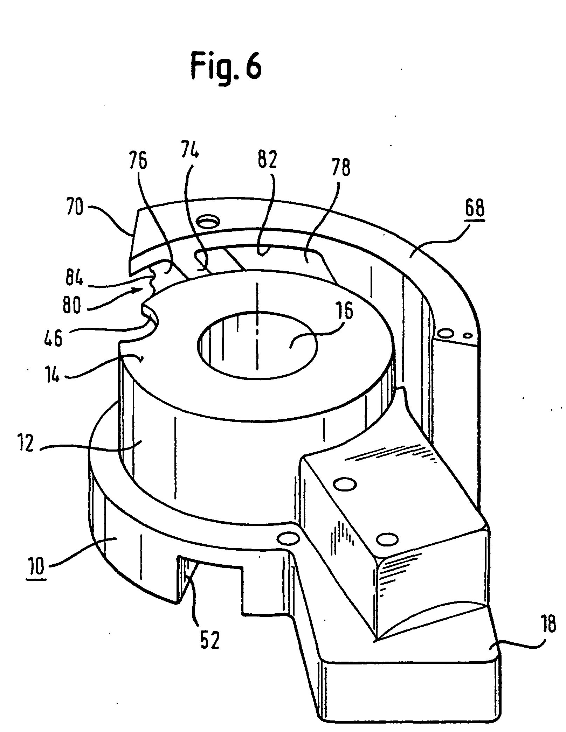

In der Fig. 6 ist eine schematische Perspektivansicht eines Absauggehäuses 10 mit einer daran angeschlossenen externen Absaughaube 68 mit außenliegender Spanführung der erfindungsgemäßen Vorrichtung dargestellt. Wie aus der Zeichnung hervorgeht, weist die Absaughaube 68 mehrere, d.h. hier zwei durch eine Leitrippe 74 voneinander abgegrenzte Absaughaubenkanäle 76, 78 auf, die sich sowohl radial als auch axial um das Werkzeug 2 (vgl. Fig. 1) herum erstrecken und an die Absauggehäuse-Nebenöffnung 62 (vgl. Fig. 2) des Absauggehäuses 10 angeschlossen sind. Der erste Absaughaubenkanal 76, der bei dieser Variante den Nebenluftstrom führt, mündet stromaufwärts direkt in die im vorliegenden Fall dem Werkstück zugewandte Absaughauben-Öffnung 80, während der zweite Absaughaubenkanal 78, der bei dieser Variante den Zusatzluftstrom führt, stromaufwärts in eine den radialen Seiten- oder Umfangsflächen des Werkzeuges 2 zugewandte Seitenöffnung 82 mündet. Die von dem Nebenluftstrom und dem Zusatzluftstrom mitgeführten Späne werden radial um das Werkzeug 2 herum und axial nach unten in die in dieser Figur nicht dargestellte Absauggehäuse-Nebenöffnung 62 und den Neben-Absaugkanal 48 des Absauggehäuses 10 geleitet. Die Absaughaube 68 besitzt in diesem Ausführungsbeispiel einen unregelmäßig geformten Absaughauben-Öffnungsrand 84.

Es wird nun die Funktion der erfindungsgemäßen Vorrichtung sowie das erfindungsgemäße Verfahren zum spanenden Bearbeiten von Werkstücken, insbesondere von Werkstücken aus Holzwerkstoffen, Kunststoff oder dergleichen mittels dieser Vorrichtung beschrieben werden. Hierzu wird auf die Fig. 1 bis 6 Bezug genommen.

Im laufenden Betrieb der erfindungsgemäße Vorrichtung, das heißt bei rotierendem Werkzeug 2 und aktivierter Saugluftquelle wird innerhalb des Absaugkanals 36 ein im wesentlichen konstanter, saugender Hauptluftstrom erzeugt und bereitgestellt, der auf einem bezogen auf die Rotationsachse A des Werkzeugs 2 im wesentlichen radialen Strömungsweg ausgehend von der Hilfsluft-Einspeisungsöffnung 52 entlang dem Spandurchtrittsfenster 26 in Richtung zu der Saugluftquelle geleitet wird und folglich auf diesem Wege entlang dem Spandurchtrittsfenster 26 in Richtung zu der Saugluftquelle strömt.

Die Erzeugung des Hauptluftstroms erfolgt dadurch, dass ein infolge der Wirkung der Saugluftquelle und der Rotation des Werkzeuges 2 pulsierend durch die Spanaufnahmeöffung 6 und das Spandurchtrittsfenster 26 einströmender (Außen-)Luftstrom mit einem durch die Wirkung der Saugluftquelle durch die Hilfsluft-Einspeisungsöffnung 52 einströmenden Hilfsluftstrom innerhalb des Absaugkanals 36 vermischt wird beziehungsweise die beiden Ströme überlagert werden. Mittels des unregelmäßig geformten vorderen und hinteren Fensterrandes 28, 30 des Spandurchtrittsfensters 26 wird der pulsierend einströmende (Außen-)Luftstrom zwangsweise verwirbelt. Darüber hinaus wird mittels des unregelmäßig geformten vorderen und hinteren Fensterrandes 28, 30 eine infolge der Rotation des Werkzeuges 2 in dessen hohlen Innenraum 8 mitgeschleppte und an der Außenseite des in den hohlen Innenraum 8 ragenden Topfabschnitts 12 und an dem Spandurchtrittsfenster 26 entlang strömende Luftschicht zwangsweise an diesen Fensterrändern 28, 30 verwirbelt.

Mittels der radialen, ersten Abstreifkante 42 und der axialen, zweiten Abstreifkante 44 werden etwaige an der radialen Innenfläche des Werkzeughohlraums 8 anhaftende oder angesammelte Späne sowie etwaige an einem der Stirnfläche 14 des Topfabschnitts 12 gegenüber liegenden Bereich des Werkzeughohlraums 8 anhaftende oder angesammelte Späne abgestreift und mittels des durch die Stirnöffnung 46 fließenden Luftstroms und des in das Spandurchtrittsfenster 26 einströmenden (Außen-)Luftstroms in den Absaugkanal 36 geleitet. Die radiale, erste Abstreifkante 42 übt gleichzeitig eine Doppelfunktion aus, da sie zusätzlich einen wesentlichen Anteil des von dem rotierenden Werkzeug 2 an dessen radialer Innenwandung mitgeschleppten Luftschicht abstreift. Die abgestreifte Luftmasse gelangt mit dem einströmenden (Außen-)Luftstrom in den Absaugkanal 36. Grundsätzlich wäre es auch denkbar Luftschichtabstreifer an der Stirnseite des Topfabschnitts anzubringen.

Durch das Spandurchtrittsfenster 26 in den Absaugkanal 36 fliegende Späne werden durch den Hauptluftstrom im wesentlichen in Richtung ihrer natürlichen Flugbahn weiterbefördert und dann über den Strömungsweg des Hauptluftstroms in Richtung zur Saugluftquelle abgeführt.

Im Fall der Variante nach Fig. 6 wird mit Hilfe der Saugluftquelle ferner ein im wesentlichen konstanter, saugender Nebenluftstrom innerhalb des mit der Absauggehäuse-Nebenöffnung 62 verbundenen Neben-Absaugkanals 48 sowie innerhalb des ersten Absaughaubenkanals 76 der Absaughaube 68 erzeugt und bereitgestellt. Mittels des Nebenluftstroms werden Späne erfasst und abgeführt, die sich in einem räumlichen Bereich vor der dem Werkstück zugewandten Absaughauben-Öffnung 80 (oder in einem räumlichen Bereich um diese herum) der Absaughaube 68 befinden, die an die Gehäuse-Nebenöffnung 62 angeschlossen ist. Durch Zusammenführen des Hauptluftstroms und des Nebenluftstroms an dem bezogen auf die Absaugrichtung 50 stromabwärts von dem Spandurchtrittsfenster 26 entfernten Strömungsabschnitt werden die von diesen beiden Strömen mitgeführten Späne auf einem gemeinsamen weiteren Strömungsweg in Richtung zur Saugluftquelle abtransportiert.

Mittels der Saugluftquelle und des Nebenluftstroms wird im vorliegenden Beispiel des Weiteren ein im Wesentlichen konstanter, saugender Zusatzluftstroms in dem zweiten Absaughaubenkanal 78 der Absaughaube 68 und an der Außenseite oder Außenfläche des Werkzeuges 2 erzeugt und bereitgestellt. Auf diese Weise werden über die Seitenöffnung 82 die Umfangs- bzw. Außenflächen des Werkzeuges 2 abgesaugt und eine außenliegende Spanführung gebildet. Der Zusatzluftstrom und der Nebenluftstrom werden im vorliegenden Beispiel im Neben-Absaugkanal 48 zusammengeleitet. Die von diesen beiden Strömen mitgeführten Späne werden somit auf einem gemeinsamen weiteren Strömungsweg, der in den Strömungsweg des Hauptluftstroms übergeht, in Richtung zur Saugluftquelle abtransportiert.

Der Nebenluftstrom wird beim Einströmen in die Absaughaubenöffnung 80 durch deren unregelmäßig geformten Öffnungsrand 84 zwangsweise verwirbelt. Ferner wird die infolge der Rotation des Werkzeuges 2 an dessen Außenseite mitgeschleppte und an der Absaughauben-Öffnung 80 entlang strömenden Luftschicht an dem Absaughauben-Öffnungsrand 84 zwangsweise verwirbelt.

Die Erfindung ist nicht auf die obigen Ausführungsbeispiele, die lediglich der allgemeinen Erläuterung des Kerngedankens der Erfindung dienen, beschränkt. Im Rahmen des Schutzumfangs können die erfindungsgemäße Vorrichtung und das erfindungsgemäße Verfahren vielmehr auch andere als die oben beschriebenen Ausgestaltungs- und Ausführungsformen annehmen. Die Vorrichtung und das Verfahren können hierbei insbesondere Merkmale aufweisen, wie es in den beiliegenden Ansprüchen definiert ist. Obwohl in den obigen Beispielen einen Hauptluftstrom beschrieben wurde, der auf einem im Wesentlichen radialen Strömungsweg geführt ist, ist es ebenso möglich, einen relativ zur Werkzeugachse axial strömenden Hauptluftstrom und entsprechend orientierte Strömungswege bereitzustellen. Im Falle eines axialen Hauptluftstroms wird in der Regel die Flugbahn der durch das Spandurchtrittsfenster in den Absaugkanal fliegenden Späne stärker umgelenkt werden müssen. Zu diesem Zweck können Umlenkeinrichtungen, beispielsweise in der Form von Umlenkblechen oder dergleichen bereitgestellt werden. Innerhalb der Kanäle des Absauggehäuses sowie der Absaughaube können zusätzlich Leitelemente und/oder Abstreifeinrichtungen vorgesehen sein. Das Spandurchtrittsfenster kann in Flugrichtung der Späne angeschrägt sein. Es ist im Sinne der Erfindung zudem denkbar, in bestimmten Anwendungsfällen die Stirnöffnung als Hilfsluft-Einspeisungsöffnung auszugestalten und umgekehrt. Der Neben-Absaugkanal kann in einer Modifikation des Absauggehäuses auch zumindest teilweise innerhalb des Topfabschnittes verlaufen. Es sind Ausführungsformen realisierbar, bei denen die Absaughaube integral mit dem Absauggehäuse ausgebildet ist und umgekehrt. Das Absauggehäuse und die Absaughaube können mit Zentrierelementen ausgestattet sein, welche eine exakte Positionierung oder Anbringung dieser Bauteile an anderen Vorrichtungskomponenten gestatten. Das Absauggehäuse und die Absaughaube sind außerdem mit Dichtungselementen ausrüstbar, welche Saugluftverluste reduzieren. Zur Erzeugung der jeweiligen Luftströme können anstelle einer einzelnen gemeinsamen Saugluftquelle auch individuelle Saugluftquellen eingesetzt werden. Alternativ zu einer Saugluftquelle ist grundsätzlich auch eine Druckluftquelle denkbar. Die erfindungsgemäße Vorrichtung kann über geeignete Kontroll- und/oder Regel- und/oder Steuereinrichtungen verfügen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 2: Werkzeug
- 4: Schneiden von 2
- 6: Spanaufnahmeöffnung von 2
- 8: Hohler Innenraum von 2
- 10: Absauggehäuse
- 12: Topfabschnitt von 10
- 14: Stirnfläche von 12
- 16: Durchgangsöffnung in 12
- 18: Anschluss von 10
- 20: Gehäusebasis von 10
- 22: Gehäusefuß von 10
- 24: Bohrungen
- 26: Spandurchtrittsfenster in 12
- 28: Vorderer, unregelmäßig geformter Fensterrand von 26
- 30: Hinterer, unregelmäßig geformter Fensterrand von 26
- 32: Oberer Fensterrand von 26
- 34: Unterer Fensterrand von 26
- 36: Absaugkanal
- 38: Vorsprünge (wellenförmig)
- 40: Ausnehmungen (wellenförmig)
- 42: Radiale, erste Abstreifkante
- 44: Axiale, zweite Abstreifkante
- 46: Stirnöffnung in 12
- 48: Neben-Absaugkanal
- 50: Absaugrichtung
- 52: Hilfsluft-Einspeisungsöffnung
- 54: Nutenartige Ausnehmung
- 56: Senkbohrung
- 58: Hilfsluftkanal
- 60: Trennwand
- 62: Absauggehäuse-Nebenöffnung
- 64: Antriebswellenaufnahme von 2
- 66: Werkstück
- 68: Absaughaube(n)
- 70: Tangentialer Absaughauben-Öffnungsrand
- 72: Werkstückkante (geradlinig)
- 74: Leitrippe in 68
- 76: Erster Absaughaubenkanal
- 78: Zweiter Absaughaubenkanal
- 80: Absaughauben-Öffnung
- 82: Seitenöffnung von 68
- 84: Unregelmäßig geformten Absaughauben-Öffnungsrand

- A: Rotationsachse von 2
- R: Rotationsrichtung von 2

## Patentansprüche

1. Vorrichtung zum spanenden Bearbeiten von Werkstücken (66), insbesondere von Werkstücken aus Holzwerkstoffen, Kunststoff oder dergleichen, umfassend
- mindestens ein spanabtragendens, rotierendes und im Wesentlichen als Hohlkörper ausgebildetes Werkzeug (2) mit wenigstens einer Schneide (4), wobei jeweils ein an die Schneide (4) angrenzender Bereich des Werkzeugs (2) durch eine Spanaufnahmeöffnung (6) zum Durchleiten von Spänen in einen hohlen Innenraum (8) des Werkzeugs (2) durchbrochen ist, und
- eine Absaugeinrichtung mit einem ortsfesten, im Wesentlichen als Hohlkörper ausgebildeten Absauggehäuse (10), das zumindest teilweise (12) in den hohlen Innenraum (8) des Werkzeugs (2) eingreift und mit einer Saugluftquelle in Verbindung steht,
- wobei der in den hohlen Innenraum (8) des Werkzeugs (2) eingreifende Teil (12) des Absauggehäuses (10) im Bereich eines der Schneide (4) zugeordneten Wirkungsortes des Werkzeugs (2) mindestens ein Spandurchtrittsfenster (26) aufweist, das in einen Absaugkanal (36) des Absauggehäuses (10) mündet, und
- **gekennzeichnet dadurch, dass** der Absaugkanal (36) in einem bezogen auf die Absaugrichtung (50) stromaufwärts an das Spandurchtrittsfenster (26) angrenzenden Absaugkanalabschnitt mindestens eine Hilfsluft-Einspeisungsöffnung (52, 54, 56, 58) aufweist.

2. Vorrichtung nach Anspruch 1,
**dadurch gekennzeichnet, dass**
das Werkzeug (2) im wesentlichen als topfartiger Hohlkörper ausgebildet ist.

3. Vorrichtung nach Anspruch 1 oder 2,
**dadurch gekennzeichnet, dass**
der in den hohlen Innenraum (8) des Werkzeugs (2) eingreifende Teil (12) des Absauggehäuses (10) den hohlen Innenraum (8) im Wesentlichen vollständig ausfüllt.

4. Vorrichtung nach einem der vorhergenannten Ansprüche,
**dadurch gekennzeichnet, dass**
der in den hohlen Innenraum (8) des Werkzeugs (2) eingreifende Teil (12) des Absauggehäuses (10) topfartig ausgebildet ist.

5. Vorrichtung nach einem der Ansprüche 1 bis 4, mit einem Werkzeug (2), dessen hohler Innenraum (8) zylindrisch geformt ist,
**dadurch gekennzeichnet, dass**
der in den hohlen Innenraum (8) des Werkzeugs (2) eingreifende Teil (12) des Absauggehäuses (10) im wesentlichen zylindrisch geformt ist.

6. Vorrichtung nach einem der Ansprüche 1 bis 4, mit einem Werkzeug (2), dessen hohler Innenraum (8) konisch geformt ist,
**dadurch gekennzeichnet, dass**
der in den hohlen Innenraum des Werkzeugs (2) eingreifende Teil des Absauggehäuses (10) im wesentlichen konisch geformt ist.

7. Vorrichtung nach einem der vorhergenannten Ansprüche,
**dadurch gekennzeichnet, dass**
das Absauggehäuse (10) eine Durchgangsöffnung (16) oder eine Vertiefung zum Aufnehmen eines Antriebsmittels (64), insbesondere einer Welle oder Achse des Werkzeuges (2) aufweist.

8. Vorrichtung nach einem der vorhergenannten Ansprüche,
**dadurch gekennzeichnet, dass**
der Absaugkanal (36) einen bezogen auf eine Rotationsachse (A) des Werkzeugs (2) im wesentlichen radialen Strömungsweg definiert, der ausgehend von der Hilfsluft-Einspeisungsöffnung (52, 54, 56, 58) entlang dem Spandurchtrittsfenster (26) in Richtung zu der Saugluftquelle führt.

9. Vorrichtung nach einem der vorhergenannten Ansprüche,
**dadurch gekennzeichnet, dass**
sich der Absaugkanal (36) ausgehend von dem Spandurchtrittsfenster (26) oder der Hilfsluft-Einspeisungsöffnung (52, 54, 56, 58) und bezogen auf die Rotationsachse (A) des Werkzeugs (2) im wesentlichen in radialer Richtung kreisbogenartig oder wendelartig um die Rotationsachse (A) herum erstreckt.

10. Vorrichtung nach Anspruch 8 oder 9,
**dadurch gekennzeichnet, dass**
die Drallrichtung der kreisbogenartigen oder wendelartigen Erstreckung des Absaugkanals (36) und die Rotationsrichtung (R) des Werkzeuges (2) gleichsinnig sind.

11. Vorrichtung nach einem der vorhergenannten Ansprüche,
**dadurch gekennzeichnet, dass**
das Absauggehäuse (10) mindestens einen Neben-Absaugkanal (48) aufweist, der mit wenigstens einer an einem außerhalb des rotierenden Werkzeugs (2) befindlichen Absauggehäuseabschnitt vorgesehenen Absauggehäuse-Nebenöffnung (62) verbunden ist, und dass der Neben-Absaugkanal (48) einen Strömungsweg für einen Nebenluftstrom definiert und in einen bezogen auf die Absaugrichtung (50) stromabwärts von dem Spandurchtrittsfenster (26) entfernten Absaugkanalabschnitt in den Absaugkanal (36) mündet.

12. Vorrichtung nach einem der vorhergenannten Ansprüche,
**dadurch gekennzeichnet, dass**
der bezogen auf die Rotationsrichtung (R) vordere Fensterrand (28) des Spandurchtrittsfensters (26) im Wesentlichen konkav ausgeschnitten ist.

13. Vorrichtung nach einem der vorhergenannten Ansprüche,
**dadurch gekennzeichnet, dass**
das Spandurchtrittsfenster (26) mindestens einen unregelmäßig (38, 40) geformten Fensterrand (28, 30) besitzt.

14. Vorrichtung nach Anspruch 13,
**dadurch gekennzeichnet, dass**
der unregelmäßig (38, 40) geformte Fensterrand (28, 30) an einer sich quer zur Rotationsrichtung (R) des Werkzeuges (2) erstreckenden Seite des Spandurchtrittsfenster (26) ausgebildet ist.

15. Vorrichtung nach Anspruch 13 oder 14,
**dadurch gekennzeichnet, dass**
der unregelmäßig geformte Fensterrand (28, 30) zahnartige Vorsprünge (38) und Ausnehmungen (40) aufweist.

16. Vorrichtung nach Anspruch 15,
**dadurch gekennzeichnet, dass**
die zahnartigen Vorsprünge (38) und/oder Ausnehmungen (40) wellenförmig sind.

17. Vorrichtung nach einem der vorhergenannten Ansprüche,
**dadurch gekennzeichnet, dass**
zumindest der bezogen auf die Rotationsrichtung (R) des Werkzeugs (2) vordere Fensterrand (28) des Spandurchtrittsfensters (26) eine Span-Abstreifeinrichtung (42, 44) aufweist.

18. Vorrichtung nach einem der vorhergenannten Ansprüche,
**dadurch gekennzeichnet, dass**
der vordere Fensterrand (28) eine bezogen auf die Rotationsachse (A) radiale, erste Abstreifkante (42) aufweist, welche bezogen auf die radiale Erstreckung des hinteren Fensterrandes (30) radial über den hinteren Fensterrand (30) hinaus ragt.

19. Vorrichtung nach einem der vorhergenannten Ansprüche,
**dadurch gekennzeichnet, dass**
der vordere Fensterrand (28) eine bezogen auf die Rotationsachse (A) des Werkzeugs (2) axiale, zweite Abstreifkante (44) aufweist, welche über eine axiale Stirnseite (14) des in den hohlen Innenraum (8) des Werkzeugs (2) eingreifenden Teils (12) des Absauggehäuses (10) hinaus ragt.

20. Vorrichtung nach einem der vorhergenannten Ansprüche,
**dadurch gekennzeichnet, dass**
die axiale Stirnseite des in den hohlen Innenraum (8) des Werkzeugs (2) eingreifenden Teils (12) des Absauggehäuses (10) eine diesen Teil axial verschließende Stirnfläche (14) aufweist und in der Stirnfläche (14) eine Stirnöffnung (46) vorgesehen ist, welche in den Absaugkanal (36) mündet.

21. Vorrichtung nach Anspruch 20,
**dadurch gekennzeichnet, dass**
die Stirnöffnung (46) in das Spandurchtrittsfenster (26) mündet.

22. Vorrichtung nach Anspruch 20 oder 21,
**dadurch gekennzeichnet, dass**
die Stirnöffnung (46) im Bereich der radialen ersten Abstreifkante (42) und/oder im Bereich der axialen zweiten Abstreifkante (44) in das Spandurchtrittsfenster (26) mündet.

23. Vorrichtung nach einem der vorhergenannten Ansprüche,
**dadurch gekennzeichnet, dass**
diese des Weitern mit mindestens einer Absaughaube (68) versehen ist, welche das Werkzeug (2) zumindest teilweise umgibt.

24. Vorrichtung nach Anspruch 23,
**dadurch gekennzeichnet, dass**
die Absaughaube (68) einen oder mehrere Absaughaubenkanäle (76, 78) aufweist.

25. Vorrichtung nach Anspruch 23 oder 24,
**dadurch gekennzeichnet, dass**
die Absaughaube (68) an den Neben-Absaugkanal (48) des Absauggehäuses (10) angeschlossen ist.

26. Vorrichtung nach einem der Ansprüche 23 bis 25,
**dadurch gekennzeichnet, dass**
die Absaughaube (68) das Werkzeug (2) in axialer Richtung überragt.

27. Vorrichtung nach einem der Ansprüche 23 bis 26,
**dadurch gekennzeichnet, dass**
die Absaughaube (68) einen unregelmäßig geformten Absaughauben-Öffnungsrand (84) besitzt.

28. Vorrichtung nach einem der Ansprüche 23 bis 27,
**dadurch gekennzeichnet, dass**
die Absaughaube (68) einen Absaughauben-Öffnungsrand (70) besitzt, der sich bezogen auf die Rotationsachse (A) und einen Schneidenflugkreis-Durchmesser des Werkzeugs (2) im Wesentlichen tangential erstreckt und von dem Schneidenflugkreis-Durchmesser zur Rotationsachse (A) hin geringfügig zurückversetzt ist.

29. Verfahren zum spanenden Bearbeiten von Werkstücken (66), insbesondere von Werkstücken aus Holzwerkstoffen, Kunststoff oder dergleichen, mittels einer Vorrichtung nach einem der Ansprüche 1 bis 16,
umfassend folgende Schritte zum Absaugen von beim Bearbeiten entstehenden Spänen:
Erzeugen und Bereitstellen eines im wesentlichen konstanten, saugenden und innerhalb des Absaugkanals (36) entlang dem Spandurchtrittsfenster (26) strömenden Hauptluftstroms.

30. Verfahren nach Anspruch 29,
**gekennzeichnet durch**
Leiten des Hauptluftstroms auf einem bezogen auf die Rotationsachse (A) des Werkzeugs (2) im wesentlichen radialen Strömungsweg ausgehend von der Hilfsluft-Einspeisungsöffnung (52, 54, 56, 58) entlang dem Spandurchtrittsfenster (26) in Richtung zu der Saugluftquelle.

31. Verfahren nach Anspruch 29 oder 30,
**gekennzeichnet durch**
Erzeugen und Bereitstellen von mindestens einem im wesentlichen konstanten, saugenden Nebenluftstrom innerhalb des mit der Absauggehäuse-Nebenöffnung (62) verbundenen Neben-Absaugkanals (48).

32. Verfahren nach einem der Ansprüche 29 bis 31,
**gekennzeichnet durch**
Zusammenführen des Hauptluftstroms und des Nebenluftstroms an einem bezogen auf die Absaugrichtung (50) stromabwärts von dem Spandurchtrittsfenster (26) entfernten Strömungsabschnitt.

33. Verfahren nach einem der Ansprüche 29 bis 32,
**gekennzeichnet durch**
zwangsweises Verwirbeln (38, 40) eines infolge der Rotation des Werkzeuges (2) pulsierend **durch** das Spandurchtrittsfenster (26) hindurch in den Absaugkanal (36) des Absauggehäuses (10) strömenden Außenluft-Stroms an mindestens einem Fensterrand (28, 30) des Spandurchtrittsfensters (26).

34. Verfahren nach einem der Ansprüche 29 bis 33,
**gekennzeichnet durch**
zwangsweises Verwirbeln (38, 40) einer infolge der Rotation des Werkzeuges (2) in dessen hohlen Innenraum (8) mitgeschleppten und an einer Außenseite des in den hohlen Innenraum (8) des Werkzeugs (2) ragenden Absauggehäuses (10, 12) und dem Spandurchtrittsfenster (26) entlang strömenden Luftschicht an mindestens einem Fensterrand (28, 30) des Spandurchtrittsfensters (26).

35. Verfahren nach einem der Ansprüche 29 bis 34,
**gekennzeichnet durch**
Vermischen des pulsierend einströmenden Außenluft-Stroms mit dem im wesentlichen konstanten Hauptluftstrom in dem Absaugkanal (36).

36. Verfahren nach einem der Ansprüche 29 bis 35,
**gekennzeichnet durch**
Erzeugen und Bereitstellen eines im wesentlichen konstanten, saugenden Zusatzluftstroms an einer Außenseite des Werkzeuges (2).

37. Verfahren nach Anspruch 36,
**gekennzeichnet durch**
Leiten (78) des Zusatzluftstroms in den Neben-Absaugkanal (48).

38. Verfahren nach einem der Ansprüche 29 bis 37,
**gekennzeichnet durch**
zwangsweises Verwirbeln (84) des Nebenluftstroms und/oder des Zusatzluftstroms an mindestens einem Absaughauben-Öffnungsrand (84) und/oder an der Absauggehäuse-Nebenöffnung (62).

39. Verfahren nach einem der Ansprüche 29 bis 38,
**gekennzeichnet durch**
zwangsweises Verwirbeln (84) einer infolge der Rotation des Werkzeuges (2) an dessen Außenseite mitgeschleppten und an einer Absaughauben-Öffnung (84) entlang strömenden Luftschicht an dem mindestens einen Absaughauben-Öffnungsrand (84).

## Claims

1. Device for machining workpieces (66), in particular workpieces composed of wood materials, plastic or the like, comprising:
- at least one cutting, rotating tool (2) constructed substantially as a hollow article having at least one cutting edge (4), wherein in each case a region of the tool (2) adjoining the cutting edge (4) is pierced by a swarf-receiving opening (6) for conveying swarf into a hollow inner chamber (8) of the tool (2) and
- a suction extraction device having a fixed extractor housing (10) constructed substantially as a hollow article which engages at least in part (12) into the hollow inner chamber (8) of the tool (2) and is connected to a source of suction air,
- wherein in the region of an action point of the tool (2) assigned to the cutting edge (4) the part (12) of the of the extractor housing (10) engaging in the hollow inner chamber (8) of the tool (2) has at least one swarf passage window (26) which opens out into an extraction channel (36) of the extractor housing (10),
- **characterised in that** in an extraction channel section adjoining the swarf passage window (26) upstream with reference to the extraction direction the extraction channel (36) has at least one auxiliary air feed opening (52, 54, 56, 58).

2. Device according to Claim 1, **characterised in that** the tool (2) is constructed substantially in the form of a pot-like hollow article.

3. Device according to Claim 1 or 2, **characterised in that** the part (12) of the extractor housing (10) engaging in the hollow inner chamber (8) of the tool (2) fills the hollow inner chamber substantially completely.

4. Device according to any of the preceding claims, **characterised in that** the part (12) of the extractor housing (10) engaging in the hollow inner chamber (8) of the tool (2) is of pot-like construction.

5. Device according to any of Claims 1 to 4, having a tool (2) whose hollow inner chamber (8) is of cylindrical shape, **characterised in that** the part (12) of the extractor housing (10) engaging in the hollow inner chamber (8) of the tool (2) is of substantially cylindrical shape.

6. Device according to any of Claims 1 to 4, having a tool (2) whose hollow inner chamber (8) is of conical shape, **characterised in that** the part of the extractor housing (10) engaging in the hollow inner chamber of the tool (2) is of substantially conical shape.

7. Device according to any of the preceding claims, **characterised in that** the extractor housing (10) possesses a passage opening (16) or a recess for receiving a drive means (64), in particular a shaft or axle of the tool (2).

8. Device according to any of the preceding claims,
**characterised in that** with respect to the axis of rotation (A) of the tool (2) the extraction channel (36) defines a substantially radial flow path which starting from the auxiliary air feed opening (52, 54, 56, 58) leads along the swarf passage window (26) in the direction towards the source of suction air.

9. Device according to any of the preceding claims, **characterised in that** starting from the swarf channel window (26) or the auxiliary air feed opening (52, 54, 56, 58) and with reference to the axis of rotation (A) of the tool (2) the extraction channel (36) extends substantially in the radial direction in the manner of an arc of a circle or a spiral around the axis of rotation (A).

10. Device according to Claim 8 or 9, **characterised in that** the turning direction of the circular arc-like or helical extension of the extraction channel (36) and the direction of rotation (R) of the tool (2) are in the same direction.

11. Device according to any of the preceding claims, **characterised in that** the extractor housing (10) has at least one secondary extraction channel (48) which is connected to at least one extractor housing secondary opening (62) provided on an extractor housing section located outside the rotating tool (2) and that the secondary extraction channel (48) defines a flow path for a secondary air stream and opens out into the extraction channel (36) into a an extraction channel section at a distance downstream from the swarf passage window (26) with reference to the extraction direction (50).

12. Device according to any of the preceding claims, **characterised in that** the front window edge (28) of the swarf passage window (26) with reference to the direction of rotation (R) is cut out in substantially concave manner.

13. Device according to any of the preceding claims, **characterised in that** the swarf passage window (26) possesses at least one irregularly (38, 40) shaped window edge (28, 30).

14. Device according to Claim 13, **characterised in that** the irregularly shaped (38, 40) window edge (28, 30) is constructed on a side of the swarf passage window (26) extending crosswise relative to the direction of rotation (R) of the tool (2).

15. Device according to Claim 13 or 14, **characterised in that** the irregularly shaped window edge (28, 30) has tooth-like projections (38) and recesses (40).

16. Device according to Claim 15, **characterised in that** the tooth-like projections (38) and/or recesses (40) are of undulatory shape.

17. Device according to any of the preceding claims, **characterised in that** at least the front window edge (28) of the swarf passage window (26) with reference to the direction of rotation (R) of the tool (2) has a swarf stripping device (42, 44).

18. Device according to any of the preceding claims, **characterised in that** the front window edge (28) has a radial, first stripping edge (42) with reference to the axis of rotation (A) which with reference to the radial extension of the rear window edge (30) projects radially outwards over the rear window edge (30).

19. Device according to any of the preceding claims, **characterised in that** the front window edge (28) has an axial, second stripping edge (44) with reference to the axis of rotation (A) of the tool (2) which projects out over an axial end face (14) of the part (12) of the extractor housing (10) engaging into the hollow inner chamber (8) of the tool (2).

20. Device according to any of the preceding claims, **characterised in that** the axial end face of the part (12) of the extractor housing (10) engaging into the hollow inner chamber (8) of the tool (2) has an end surface (14) sealing this part axially and in the end surface (14) an end opening (46) is provided which opens out into the extraction channel (36).

21. Device according to Claim 20, **characterised in that** the end opening (46) opens out into the swarf passage window (26).

22. Device according to Claim 20 or 21, **characterised in that** the end opening (46) opens out into the swarf passage window (26) in the region of the radial, first stripping edge (42) and/or in the region of the axial, second stripping edge (44).

23. Device according to any of the preceding claims, **characterised in that** said device is further provided with at least one extractor hood (68) which surrounds the tool (2) at least in part.

24. Device according to Claim 23, **characterised in that** the extractor hood (68) has one or more extractor hood channels (76, 78).

25. Device according to Claim 23 or 24, **characterised in that** the extractor hood (68) is connected to the secondary extraction channel (48) of the extractor housing (10).

26. Device according to any of Claims 23 to 25, **characterised in that** the extractor hood (68) projects over the tool (2) in the axial direction.

27. Device according to any of Claims 23 to 26, **characterised in that** the extractor hood (68) possesses an irregularly shaped extractor hood opening edge (84).

28. Device according to any of Claims 23 to 27, **characterised in that** the extractor hood (68) possesses an extractor hood opening edge (70) which extends substantially tangentially with reference to the axis of rotation (A) and a cutting edge flight circle diameter of the tool (2) and is set back slightly from the cutting edge flight circle diameter towards the axis of rotation (A).

29. Method for machining workpieces (66), in particular workpieces composed of wood materials, plastic or the like, by means of a device according to any of Claims 1 to 16 comprising the following steps for the extraction by suction of swarf produced during machining: production and provision of a substantially constant, sucking main air stream flowing along the swarf passage window (26) inside the extraction channel (36).

30. Method according to Claim 29, **characterised by** conveying the main air stream on a substantially radial flow path with reference to the axis of rotation (A) of the tool (2) starting from the auxiliary feed opening (52, 54, 56, 58) along the swarf passage window (26) in the direction towards the source of suction air.

31. Method according to Claim 29 or 30, **characterised by** producing and providing at least one substantially constant, sucking secondary air stream inside the secondary extraction channel (48) connected to the extractor housing secondary opening (62).

32. Method according to any of Claims 29 to 31, **characterised by** bringing together the main air stream and the secondary air stream at a flow section at a distance downstream from the swarf passage window (26) with reference to the extraction direction (50).

33. Method according to any of Claims 29 to 32, **characterised by** forced vortexing (38, 40) of a stream of outside air flowing as a result of the rotation of the tool (2) in pulsating manner through the swarf passage window (26) into the extraction channel (36) of the extractor housing (10) at one window edge (28, 30) at least of the swarf passage window (26).

34. Method according to any of Claims 29 to 33, **characterised by** forced vortexing (38, 40) of a layer of air carried along as a result of the rotation of the tool (2) into the hollow inner chamber (8) thereof and flowing on an outer side of the extractor housing (10, 12) projecting into the hollow inner chamber (8) of the tool (2) and along the swarf passage window (26) at one window edge (28, 30) at least of the swarf passage window (26).

35. Method according to any of Claims 29 to 34, **characterised by** mixing of the stream of outside air flowing inwards in pulsating manner with the substantially constant main air stream in the extraction channel (36).

36. Method according to any of Claims 29 to 35, **characterised by** producing and providing a substantially constant, sucking additional air stream on at outer side of the tool (2).

37. Method according to Claim 36, **characterised by** conveying (78) the additional air stream into the secondary extraction channel (48).

38. Method according to any of Claims 29 to 37, **characterised by** forced vortexing (84) of the secondary air stream and/or of the additional air stream at one extractor hood opening edge (84) at least and/or at the extractor hood secondary opening (62).

39. Method according to any of Claims 29 to 38, **characterised by** forced vortexing (84) of a layer of air carried along as a result of the rotation of the tool (2) on the outer side thereof and flowing along at an extractor hood opening (84) at one extractor hood opening edge (84) at least.

## Revendications

1. Dispositif d'usinage avec enlèvement de copeaux, de pièces d'ouvrage (66), en particulier de pièces d'ouvrage en matériaux ligneux, en matière synthétique ou analogue, comprenant :
- au moins un outil (2) opérant par enlèvement de copeaux, réalisé de façon à tourner et sensiblement en forme de corps creux, avec au moins un tranchant (4), où chaque fois une zone, limitrophe au tranchant (4), de l'outil (2), étant interrompue par une ouverture de réception de copeaux (6) pour le guidage de copeaux dans un espace intérieur (8) creux de l'outil (2), et
- un dispositif d'aspiration présentant un carter d'aspiration (10), localement fixe, réalisé sensiblement sous forme de corps creux, s'engageant au moins partiellement (12) dans l'espace intérieur (8) creux de l'outil (2), et relié à une source pneumatique d'aspiration,
- la partie (12) s'engageant dans l'espace intérieur (8) creux de l'outil (2) du carter d'aspiration (10), présentant dans la zone d'un site d'action, actionné au tranchant (4), de l'outil (2), au moins une fenêtre de passage de copeaux (26) débouchant dans un canal d'évacuation par aspiration (36) du carter d'aspiration, et
- **caractérisé en ce que** le canal d'évacuation par aspiration (36) présente au moins une ouverture d'injection d'air auxiliaire (52, 54, 56, 58) dans un tronçon de canal d'évacuation par aspiration limitrophe à la fenêtre de passage de copeaux (26), en amont en observant dans la direction d'aspiration (50).

2. Dispositif selon la revendication 1,
**caractérisé en ce que**
l'outil (2) est réalisé sensiblement sous la forme de corps creux du genre d'un pot.

3. Dispositif selon la revendication 1 ou 2,
**caractérisé en ce que**
la partie (12), s'engageant dans l'espace intérieur (8) creux de l'outil (2), du carter d'aspiration (10), remplit pratiquement complètement l'espace intérieur (8) creux.

4. Dispositif selon l'une des revendications précédentes,
**caractérisé en ce que**
la partie (12), s'engageant dans l'espace intérieur (8) creux de l'outil (2), du carter d'aspiration (10) est conformée en pot.

5. Dispositif selon l'une des revendications 1 à 4, avec un outil (2), dont l'espace intérieur (8) creux est de forme cylindrique,
**caractérisé en ce que**
la partie (12), s'engageant dans l'espace intérieur (8) creux de l'outil (2), du carter d'aspiration (10) est de forme sensiblement cylindrique.

6. Dispositif selon l'une des revendications 1 à 4, avec un outil (2), dont l'espace intérieur (8) creux est de forme conique,
**caractérisé en ce que**
la partie, s'engageant dans l'espace intérieur creux de l'outil (2), du carter d'aspiration (10) est sensiblement de forme conique.

7. Dispositif selon l'une des revendications précédentes,
**caractérisé en ce que**
le carter d'aspiration (10) présente une ouverture de passage (16) ou un creusement, pour recevoir un moyen d'entraînement (64), en particulier un arbre ou un axe de l'outil.

8. Dispositif selon l'une des revendications précédentes,
**caractérisé en ce que**
le canal d'aspiration (36) définit un chemin d'écoulement sensiblement radial par rapport à un axe de rotation (A) de l'outil (2), chemin d'écoulement qui, en partant de l'ouverture d'injection d'air auxiliaire (52, 54, 56, 58), guide le long de la fenêtre de passage de copeaux (26), en direction de la source pneumatique d'aspiration.

9. Dispositif selon l'une des revendications précédentes,
**caractérisé en ce que**
le canal d'évacuation par aspiration (36) s'étend en partant de la fenêtre de passage de copeaux. (26) ou de l'ouverture d'injection d'air auxiliaire (52, 54, 56, 58) et sensiblement en direction radiale, à la façon d'un arc de cercle ou d'une ondulation, autour de l'axe de rotation (A), par rapport à l'axe de rotation (A) de l'outil (2).

10. Dispositif selon la revendication 8 ou 9,
**caractérisé en ce que**
le sens de rotation de l'étendue, du type d'un arc de cercle ou du type d'une ondulation, du canal d'évacuation par aspiration (36), et le sens de rotation (R) de l'outil (12) sont identiques.

11. Dispositif selon l'une des revendications précédentes,
**caractérisé en ce que**
le carter d'aspiration (10) présente au moins un canal d'évacuation par aspiration annexe (48), relié à au moins une ouverture annexe de carter d'aspiration (12), prévue sur un tronçon de carter d'aspiration se trouvant à l'extérieur de l'outil (2) rotatif, et **en ce que** le canal d'évacuation par aspiration annexe (48) définit un chemin d'écoulement pour un écoulement d'air annexe, et débouche dans le canal d'évacuation par aspiration (36), en un tronçon de canal d'évacuation par aspiration éloigné de la fenêtre de passage de copeaux (26), en aval de la fenêtre de passage de copeaux (26) par rapport à la direction d'aspiration (50).

12. Dispositif selon l'une des revendications précédentes,
**caractérisé en ce que**
le bord de fenêtre (28) avant, en observant dans le sens de rotation (R), de la fenêtre de passage de copeaux (26), est découpé de façon sensiblement concave.

13. Dispositif selon l'une des revendications précédentes,
**caractérisé en ce que**
la fenêtre de passage de copeaux (26) comporte au moins un bord de fenêtre (28, 30) à forme irrégulière (38, 40).

14. Dispositif selon la revendication 13,
**caractérisé en ce que**
le bord de fenêtre (28, 30) à forme irrégulière (38, 40) est réalisé sur un côté de fenêtre de passage de copeaux (26) s'étendant transversalement par rapport au sens de rotation (R) de l'outil (2).

15. Dispositif selon la revendication 13 ou 14,
**caractérisé en ce que**
le bord de fenêtre (28, 30) à forme irrégulière (38, 40) présente des saillies (38) du genre de dents et des évidements (40).

16. Dispositif selon la revendication 15,
**caractérisé en ce que**
les saillies (38) du genre de dents et/ou les évidements (40) sont de forme ondulée.

17. Dispositif selon l'une des revendications précédentes,
**caractérisé en ce qu'**
au moins le bord de fenêtre (28) avant, en se référant à la direction de rotation (R) de l'outil (2), de la fenêtre de passage de copeaux (28), présente un dispositif de raclage de copeaux (42, 44).

18. Dispositif selon l'une des revendications précédentes,
**caractérisé en ce que**
le bord de fenêtre avant (28) présente une première arête de raclage (42), orientée radialement par rapport à l'axe de rotation (A) et sortant radialement du bord de fenêtre arrière (30), en se référant à l'étendue radiale du bord de fenêtre arrière (30).

19. Dispositif selon l'une des revendications précédentes,
**caractérisé en ce que**
le bord de fenêtre avant (28) présente une deuxième arête de raclage (44), axiale, en se référant à l'axe de rotation (A) de l'outil (2), arête de raclage qui ressort par une face frontale (14) axiale de la partie (12), s'engageant dans l'espace intérieur (8) creux de l'outil (2), du carter d'aspiration (10).

20. Dispositif selon l'une des revendications précédentes,
**caractérisé en ce que**
la face frontale axiale de la partie (12), s'engageant dans l'espace intérieur (8) creux de l'outil (2), du carter d'aspiration (10), présente une face frontale (14) obturant axialement cette partie et, dans la face frontale (14), est prévue une ouverture frontale (46), débouchant dans le canal d'évacuation par aspiration (36).

21. Dispositif selon la revendication 20,
**caractérisé en ce que**
l'ouverture frontale (46) débouche dans la fenêtre de passage de copeaux (26).

22. Dispositif selon la revendication 20 ou 21,
**caractérisé en ce que**
l'ouverture frontale (46) débouche, dans la zone de la première arête de raclage (42) radiale et/ou dans la zone de la deuxième arête de raclage (44) axiale, dans la fenêtre de passage de copeaux (26).

23. Dispositif selon l'une des revendications précédentes,
**caractérisé en ce que**
celui-ci est muni, en outre, d'au moins une hotte d'évacuation par aspiration (68), entourant au moins partiellement l'outil (2).

24. Dispositif selon la revendication 23,
**caractérisé en ce que**
la hotte d'évacuation par aspiration (68) présente un ou plusieurs canaux de hotte d'évacuation par aspiration (76, 78) .

25. Dispositif selon la revendication 23 ou 24,
**caractérisé en ce que**
la hotte d'évacuation par aspiration (68) est raccordée au canal d'évacuation par aspiration annexe (48) du carter d'aspiration (10).

26. Dispositif selon l'une des revendications 23 à 25,
**caractérisé en ce que**
la hotte d'évacuation par aspiration (68) dépasse de l'outil (2) en direction axiale.

27. Dispositif selon l'une des revendications 23 à 26,
**caractérisé en ce que**
la hotte d'évacuation par aspiration (68) comporte un bord d'ouverture de hotte d'évacuation par aspiration (84) à forme irrégulière.

28. Dispositif selon l'une des revendications 23 à 27,
**caractérisé en ce que**
la hotte d'évacuation par aspiration (68) comporte un bord d'ouverture de hotte d'évacuation par aspiration (70), qui s'étend sensiblement tangentiellement, par rapport à l'axe de rotation (A) et à un diamètre de cercle de vol de tranchant de l'outil (2), et est en léger retrait du diamètre de cercle de vol de tranchant par rapport à l'axe de rotation (A).

29. Procédé d'usinage avec enlèvement de copeaux de pièces d'ouvrage, en particulier de pièces d'ouvrage en matériaux ligneux, en matière synthétique ou analogue, à l'aide d'un dispositif selon l'une des revendications 1 à 16,
comprenant les étapes suivantes d'aspiration de copeaux produits lors de l'usinage :
production et fourniture d'un flux d'air principal constant, à effet aspirateur, et s'écoulant à l'intérieur du canal d'évacuation par aspiration (36), le long de la fenêtre de passage de copeaux (26).

30. Procédé selon la revendication 29,
**caractérisé par**
le guidage de l'écoulement d'air principal sur un chemin d'écoulement sensiblement radial par rapport à l'axe de rotation (A) de l'outil (2), en partant de l'ouverture d'injection d'air auxiliaire (52, 54, 56, 58), le long de la fenêtre de passage de copeaux, dans la direction de la source pneumatique d'aspiration.

31. Procédé selon la revendication 29 ou 30,
**caractérisé par**
la production et la fourniture d'au moins un écoulement d'air annexe aspirant, sensiblement constant, à l'intérieur du canal d'aspiration annexe (48), relié à l'ouverture annexe de carter d'aspiration (62).

32. Procédé selon l'une des revendications 29 à 31,
**caractérisé par**
le regroupement de l'écoulement d'air principal et de l'écoulement d'air annexe en un tronçon d'écoulement distant de la fenêtre de passage de copeaux (26), en aval du dispositif d'aspiration (50).

33. Procédé selon l'une des revendications 29 à 32,
**caractérisé par**
une mise en tourbillonnement forcée (38, 40) d'un écoulement d'air extérieur qui, par suite de la rotation de l'outil (2), s'écoule de façon pulsatoire à travers la fenêtre de passage de copeaux (26), en passant dans le canal d'évacuation par aspiration (36) du carter d'aspiration (10), sur au moins un bord de fenêtre (28, 30) de la fenêtre de passage de copeaux (26).

34. Procédé selon l'une des revendications 29 à 33,
**caractérisé par**
la mise en tourbillonnement forcée (38, 40) d'une couche d'air, ayant été entraînée par suite de la rotation de l'outil (2), dans son espace intérieur (8) creux et s'écoulant sur une face extérieure du carter d'aspiration (10, 12), pénétrant dans l'espace intérieur creux (8) de l'outil (2) et s'écoulant le long de la fenêtre de passage de copeaux (26), sur au moins un bord de fenêtre (28, 30) de la fenêtre de passage de copeaux (26).

35. Procédé selon l'une des revendications 29 à 34,
**caractérisé par**
le mélange de l'écoulement d'air extérieur, s'introduisant de façon pulsatoire, avec l'écoulement d'air principal sensiblement constant, ceci se faisant dans le canal d'évacuation par aspiration (36).

36. Procédé selon l'une des revendications 29 à 35,
**caractérisé par**
la production et la fourniture d'un flux d'air additionnel aspirant, sensiblement constant, sur une face extérieure de l'outil (2).

37. Procédé selon la revendication 36,
**caractérisé par**
le guidage (78) de l'écoulement d'air additionnel dans le canal d'évacuation par aspiration annexe (48).

38. Procédé selon l'une des revendications 29 à 37,
**caractérisé par**
la mise en tourbillonnement forcée (84) de l'écoulement d'air annexe et/ou de l'écoulement d'air additionnel en au moins un bord d'ouverture de hotte d'évacuation par aspiration (84) et/ou à l'ouverture annexe de carter d'aspiration (62).

39. Procédé selon l'une des revendications 29 à 38,
**caractérisé par**
la mise en tourbillonnement forcée (84) d'une couche d'air entraînée par suite de la rotation de l'outil (2), sur sa face extérieure, et s'écoulant le long d'une ouverture de hotte d'évacuation par aspiration (84), sur le au moins un bord d'ouverture de hotte d'évacuation par aspiration (84).
